(19) **Europäisches Patentamt / European Patent Office / Office européen des brevets**

(11) **EP 4 195 830 A1**

(12) **EUROPEAN PATENT APPLICATION**
published in accordance with Art. 153(4) EPC

(43) Date of publication:
**14.06.2023 Bulletin 2023/24**

(51) International Patent Classification (IPC):
**H04W 72/04** (2023.01)  **H04W 48/10** (2009.01)

(21) Application number: **21854132.4**

(52) Cooperative Patent Classification (CPC):
**H04W 48/10; H04W 72/04**

(22) Date of filing: **25.05.2021**

(86) International application number:
**PCT/JP2021/019715**

(87) International publication number:
**WO 2022/030075 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2020   JP 2020133006**

(71) Applicant: **Panasonic Intellectual Property Corporation of America**
**Torrance, CA 90504 (US)**

(72) Inventors:
• **MAKI, Shotaro**
  **Osaka-shi Osaka 540-6207 (JP)**
• **LI, Hongchao**
  **63225 Langen (DE)**
• **TRAN, Xuan Tuong**
  **Singapore 469332 (SG)**
• **NISHIO, Akihiko**
  **Osaka-shi Osaka 540-6207 (JP)**
• **IWAI, Takashi**
  **Osaka-shi Osaka 540-6207 (JP)**
• **HORIUCHI, Ayako**
  **Osaka-shi Osaka 540-6207 (JP)**
• **SUZUKI, Hidetoshi**
  **Osaka-shi Osaka 540-6207 (JP)**

(74) Representative: **Grünecker Patent- und Rechtsanwälte**
**PartG mbB**
**Leopoldstraße 4**
**80802 München (DE)**

(54) **TERMINAL, BASE STATION, AND COMMUNICATION METHOD**

(57)    The purpose of the present invention is to improve the received quality of a synchronization signal in a terminal. The terminal is equipped with: a reception circuit that receives a first synchronization signal block and a second synchronization signal block that is different from the first synchronization signal block in at least one of the sequence and the signal position; and a control circuit that performs a cell search on the basis of the first synchronization signal block and the second synchronization signal block.

FIG. 8

**Description**

Technical Field

The present disclosure relates to a terminal, a base station, and a communication method.

Background Art

A communication system called the 5th generation mobile communication system (5G) has been studied. The 3rd Generation Partnership Project (3GPP), an international standards-developing organization, has been studying development of the 5G communication system in terms of both the development of LTE/LTE-Advanced systems and a New Radio Access Technology (also referred to as New RAT or NR), which is a new method not necessarily backward compatible with the LTE/LTE-Advanced systems (see, for example, Non Patent Literature (hereinafter referred to as "NPL") 1).

Citation List

Non Patent Literature

NPL 1
RP-181726, "Revised WID on New Radio Access Technology", NTT DOCOMO, September 2018
NPL 2
RP-193240, "New SID on NR coverage enhancement", China Telecom, December 2019
NPL 3
RP-193238, "New SID on Support of Reduced Capability NR Devices", Ericsson, December 2019

Summary of Invention

There is scope for further study, however, on a method for enhancing received quality of a synchronization signal in a terminal.
One non-limiting and exemplary embodiment of the present disclosure facilitates providing a terminal, a base station, and a communication method each capable of enhancing received quality of a synchronization signal in a terminal.
A terminal according to an embodiment of the present disclosure includes: reception circuitry, which, in operation, receives a first synchronization signal block and a second synchronization signal block of which at least one of a sequence and a signal mapping is different from that of the first synchronization signal block; and control circuitry, which, in operation, performs cell search based on the first synchronization signal block and the second synchronization signal block.
It should be noted that general or specific embodiments may be implemented as a system, an apparatus, a method, an integrated circuit, a computer program, a storage medium, or any selective combination thereof.
According to an embodiment of the present disclosure, it is possible to enhance received quality of a synchronization signal in a terminal.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an exemplary configuration of Synchronization Signal (SS)/Physical Broadcast Channel (PBCH) Block (SSB);
FIG. 2 illustrates exemplary beam sweeping;
FIG. 3 illustrates another exemplary beam sweeping;
FIG. 4 illustrates exemplary legacy SSB and additional SSB;
FIG. 5 is a block diagram illustrating an exemplary configuration of a part of a base station;

FIG. 6 is a block diagram illustrating an exemplary configuration of a part of a terminal;

FIG. 7 is a block diagram illustrating an exemplary configuration of the base station;

FIG. 8 is a block diagram illustrating an exemplary configuration of the terminal;

FIG. 9 is a flowchart illustrating an exemplary operation of the base station and the terminal;

FIG. 10 illustrates an exemplary legacy SSB and additional SSB according to Operation Example 1;

FIG. 11 illustrates an exemplary legacy SSB and additional SSB according to Operation Example 2;

FIG. 12 illustrates another exemplary legacy SSB and additional SSB according to Operation Example 2;

FIG. 13 illustrates an exemplary legacy SSB and additional SSB according to Operation Example 3;

FIG. 14 illustrates an exemplary legacy SSB and additional SSB according to Operation Example 4;

FIG. 15 illustrates another exemplary legacy SSB and additional SSB according to Operation Example 4;

FIG. 16 illustrates still another exemplary legacy SSB and additional SSB according to Operation Example 4;

FIG. 17 illustrates exemplary multiplexing of additional SSB and type 0 Physical Downlink Control Channel (PDCCH);

FIG. 18 illustrates another exemplary multiplexing of additional SSB and type 0 PDCCH;

FIG. 19 illustrates an exemplary setting of legacy SSB and additional SSB;

FIG. 20 illustrates another exemplary setting of legacy SSB and additional SSB;

FIG. 21 illustrates still another exemplary setting of legacy SSB and additional SSB;

FIG. 22 illustrates an exemplary setting of legacy SSB and additional SSB in an unlicensed band;

FIG. 23 illustrates an exemplary architecture for a 3GPP NR system;

FIG. 24 is a schematic diagram illustrating a functional split between NG-RAN and 5GC;

FIG. 25 is a sequence diagram for Radio Resource Control (RRC) connection setup/reconfiguration procedures.

FIG. 26 is a schematic diagram illustrating a usage scenario of an enhanced Mobile BroadBand (eMBB), massive Machine Type Communications (mMTC), and Ultra Reliable and Low Latency Communications (URLLC); and

FIG. 27 is a block diagram illustrating an exemplary 5G system architecture for a non-roaming scenario.

Description of Embodiments

Hereinafter, embodiments of the present disclosure will be described in detail with reference to the accompanying drawings.

Note that, in the following description, a radio frame, a slot, and a symbol are, for example, each a physical resource unit in a time domain. For example, the length of one frame may be 10 milliseconds. For example, one frame may be configured by a plurality (e.g., 10, 20, or another value) of slots. Further, for example, the number of slots configuring one frame may be variable depending on the slot length. Furthermore, for example, one slot may be configured by a plurality (e.g., 14 or 12) of symbols. For example, one symbol is the smallest physical resource unit in the time domain, and the symbol length may vary depending on the subcarrier spacing (SCS).

Further, a subcarrier and a resource block (RB) are each a physical resource unit in a frequency domain. For example, one resource block may be configured by 12 subcarriers. For example, one subcarrier may be the smallest physical resource unit in the frequency domain. The subcarrier spacing is variable, and may be 15 kHz, 30 kHz, 60 kHz, 120 kHz, 240 kHz, or another value.

[Reduced Capability NR Devices]

For example, in Release 17 (hereinafter, referred to as Rel-17 NR), a specification is expected to be developed to archieve a terminal (e.g., also referred to as an NR terminal) of which the communicable area (coverage) is wide compared to a terminal corresponding to Release 15 or 16 (hereinafter, referred to as Rel-15/16 NR) (e.g., see NPL 2) (or Coverage Enhancement (CE)).

Further, in Rel-17 NR, for example, a specification is expected to be developed to archieve a terminal (e.g., NR terminal) that supports a variety of use cases while reducing power consumption or cost by limiting some functions or capabilities compared to Rel-15/16 NR (see, e.g., NPL 3). Note that such a mobile station is sometimes referred to as a reduced capability NR device, RedCap, a RedCap terminal, NR-Lite, or NR-Light, for example.

[Cell Search by Terminal]

A terminal not connecting to a cell (e.g., also referred to as an RRC_IDLE mode terminal) may find a cell using a Synchronization Signal (SS)/Physical Broadcast Channel (PBCH) Block (SSB). For example, a procedure for finding a cell may be referred to as cell search.

In the cell search, the terminal may perform symbol synchronization, identification of a cell ID (e.g., Physical-layer Cell Identities (PCI)), identification of a slot number, and identification of a frame number, for example.

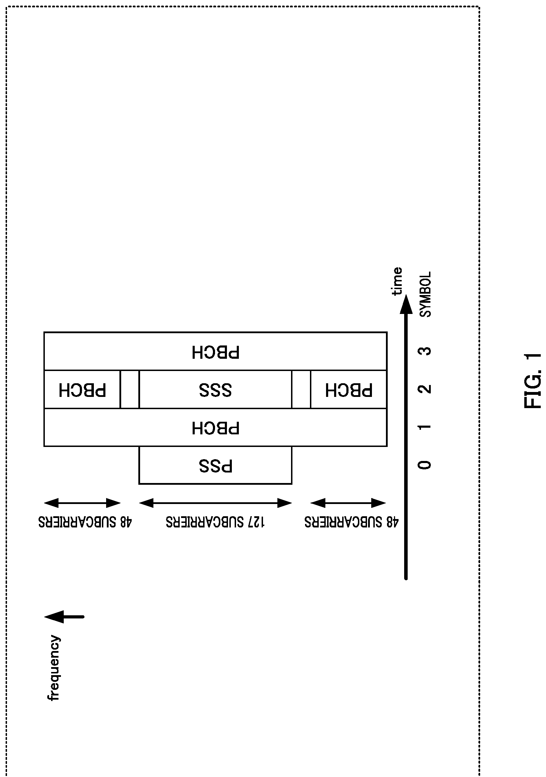

FIG. 1 illustrates an exemplary configuration of an SSB. As illustrated in FIG. 1, the SSB may be a set of signals (or a signal block) including a primary synchronization signal (referred to as Primary SS (PSS) or first synchronization signal), a secondary synchronization signal (referred to as Secondary SS (SSS) or second synchronization signal), a broadcast channel (referred to as PBCH or broadcast signal), and a reference signal for PBCH (e.g., Demodulation Reference Signal (DMRS)). For example, as illustrated in FIG. 1, PSS may be mapped to the beginning of the SSB (e.g., the zeroth symbol), SSS may be mapped to the second symbol of the SSB, and PBCHs may be mapped to the first to third symbols of the SSB. Further, DMRS for PBCH may be mapped in the PBCH area of the first to third symbols of the SSB.

SSB may be transmitted from a base station, for example, at a certain temporal timing (e.g., defined time spacing). The terminal may perform detection and decoding in the order of PSS, SSS, DMRS for PBCH, and PBCH, for example.

Exemplary cell search processing using SSB in a terminal will be described below.

(1) PSS Detection

The terminal may, for example, attempt to detect PSS. As an example, PSS may be transmitted with any of three types of sequences (e.g., length 127) known to the terminal. The terminal does not know the timing at which PSS is transmitted. The terminal may calculate a correlation value between a reception signal at a certain time resource (e.g., symbol) and a replica of the known sequences for PSS. When detecting a symbol having a high correlation value with any of the replicas (e.g., the correlation value is higher than a threshold value), the terminal may determine that symbol synchronization has been archieved. Further, the terminal may identify the value of the parameter (e.g., $N_{ID}^{(2)}$) used for determination (e.g., calculation) of a cell ID (e.g., PCI), which will be described later, based on the sequence of PSS when the symbol synchronization is performed, for example.

(2) SSS Detection

The terminal may, for example, attempt to detect SSS. As an example, SSS may be transmitted with any of 336 types of sequences (e.g., length 127) known to the terminal in a symbol (e.g., the second symbol of SSB) positioned two symbols after a symbol (e.g., the zeroth symbol of SSB) to which PSS detected by the terminal is mapped. The terminal may calculate a correlation value between a reception signal in a symbol in which SSS may be transmitted and the replicas of the known sequences for SSS. The terminal may determine that a sequence having a high correlation value (e.g., a sequence having a higher correlation value than a threshold value) is a sequence of SSS. Further, the terminal may identify the value of the parameter (e.g., $N^{ID(1)}$) based on the sequence of SSS at the time of the identification.

Then, the terminal may identify a cell ID (e.g., PCI) based on the identified PSS sequence and the SSS sequence. The terminal may, for example, calculate the PCI by "$3N^{ID(1)} + N^{ID(2)}$".

(3) Detection of DMRS for PBCH

The terminal may, for example, attempt to detect DMRS for PBCH. DMRS for PBCH may be mapped to, for example, any of symbols from the previous symbol to the following symbol (e.g., from the first symbol to third symbol of the SSB) of a symbol to which the detected SSS is mapped (the second symbol of the SSB). A sequence of DMRS for PBCH varies depending on, for example, a part or all of a bit sequence indicating an SSB index with which the slot number can be identified. Further, a sequence of DMRS for PBCH may vary depending on, for example, a half frame bit (e.g., the information indicating that the received SSB is mapped in the first half (e.g., first half frame) or the second half (e.g., second half frame) of the radio frame).

The terminal may calculate a correlation value between a reception signal of DMRS in a symbol in which DMRS for PBCH may be transmitted and replicas differing from each other depending on the slot numbers, and determines that a sequence having a high correlation value (e.g., a sequence having a higher correlation value than a threshold value) is a sequence of DMRS. The terminal may, for example, obtain a part or all of a bit sequence indicating an SSB index based on the detected DMRS sequence. Further, the terminal may, for example, obtain a half frame bit based on the detected DMRS sequence. Furthermore, the terminal may, for example, estimate a channel (a propagation path characteristic) using the detected DMRS for PBCH.

(4) PBCH Decoding

The terminal may, for example, decode PBCH mapped to the same symbol as DMRS for PBCH based on the channel estimation value. The terminal may also obtain, for example, a half frame bit and a radio frame number (e.g., a System Frame Number (SFN)) included in the PBCH. Further, the terminal may obtain some of the bits indicating an SSB index. Then, the terminal may, for example, identify the temporal position (e.g., a symbol, a slot, or a frame) of the received SSB based on each value of the SSB index, the SFN, and the half frame bit.

The exemplary cell search processing has been described above.

[Beam Sweeping]

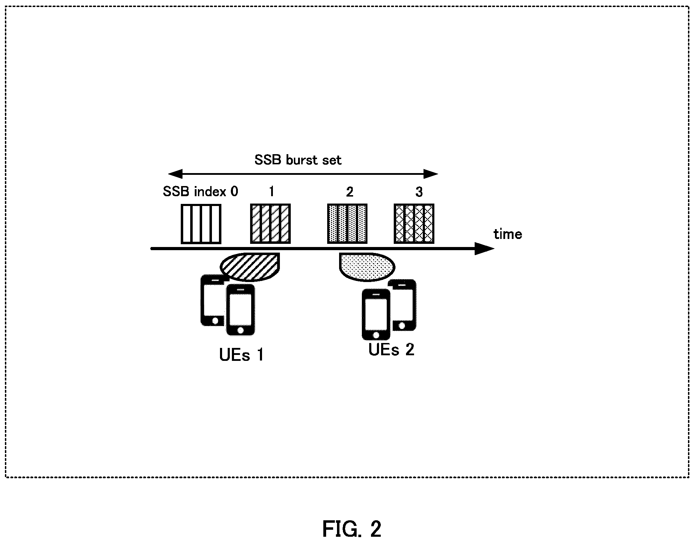

For example, the base station can transmit a plurality of SSBs having different indexes from each other at each time. For example, the base station may set different SSB indexes (e.g., SSB indexes = 0 to 3 in FIG. 2) to SSBs transmitted at different times, and may transmit the SSBs using different beams for respective SSB indexes. This process is referred to as beam sweeping, for example.

Further, a set of SSBs in which SSBs having different SSB indexes are included is referred to as an "SSB burst set (or SSB burst or SS burst)". The SSB burst set may be transmitted, for example, in a certain half frame (e.g., the first half or the second half of the frame).

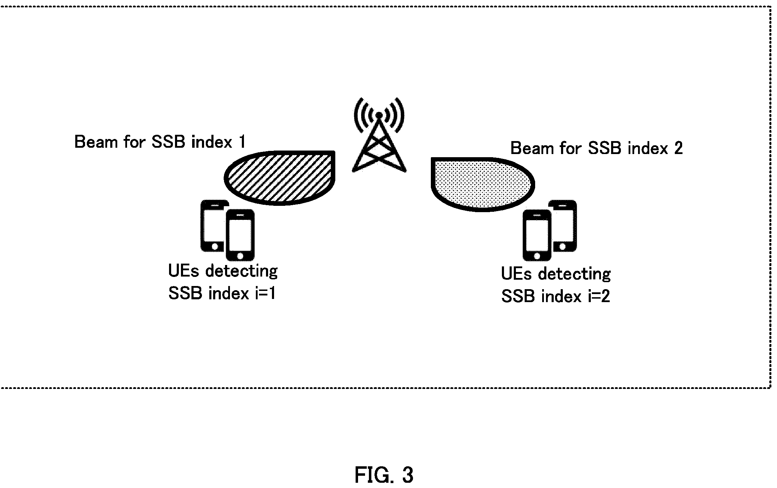

The terminal may, for example, report an SSB index of one SSB having a higher received strength (or received quality) (e.g., one SSB having the best received strength) among the detected SSBs. FIG. 3 illustrates exemplary beam sweeping. For example, one or a plurality of terminals on the left side in FIG. 3 may select SSB index 1, and may transmit the preamble to the base station in a resource (e.g., Physical Random Access Channel (PRACH) resource) associated with SSB index 1. Similarly, one or a plurality of terminals on the right side in FIG. 3 may select SSB index 2, and may transmit the preamble to the base station in a PRACH resource associated with SSB index 2.

[Coverage Expansion]

According to NPL 2, specification of a technique (CE: Coverage Enhancement) for realizing a wider coverage than the initial release of NR has been discussed.

Further, according to NPL 3, for example, a specification of a technique (e.g., Reduced Capability) for realizing a terminal that is lower in cost than the initial release of NR has been discussed. One exemplary technique for reducing the cost includes a reduction (in other words, a limitation) in the number of antennae included in the terminal or reduction in a bandwidth supported by the terminal.

However, these techniques may decrease the coverage. Thus, for example, a technique for compensating for the coverage may be discussed in the future. For example, a technique for expanding the coverage of SSB may be discussed in order to realize a terminal having a Coverage Enhancement or a Reduced Capability.

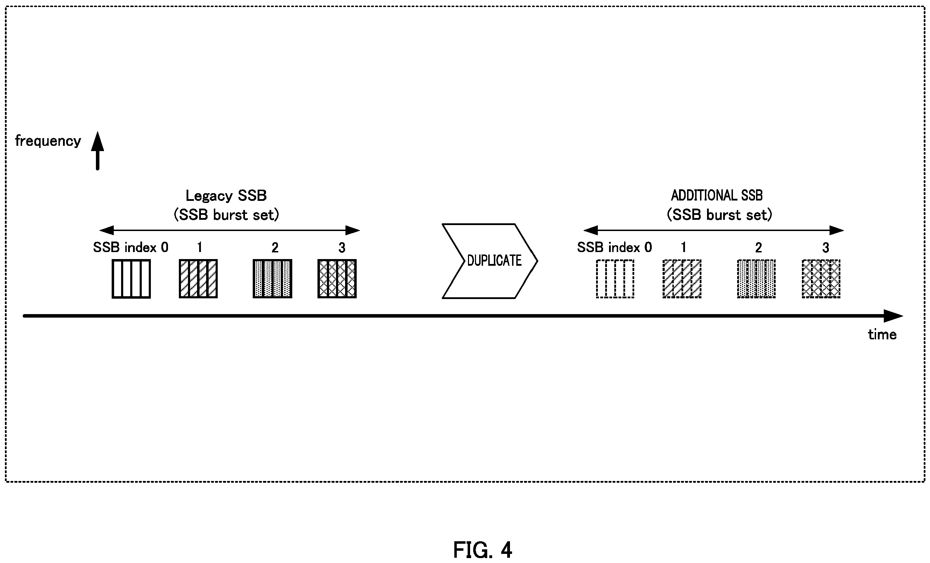

One of the SSB coverage expansion techniques is, for example, as illustrated in FIG. 4, a method for duplicating (or performing repetition of) an SSB (or SSB burst set) specified in Rel-15/16 and transmitting additional SSB in a different time or a frequency resource from that of the SSB. This allows a terminal corresponding to Rel-17 NR or later release (e.g., a terminal to which RedCap or CE is applied) to receive a larger number of SSBs than a terminal corresponding to Rel-15/16 (e.g., referred to as a Rel-15/16 terminal).

However, another terminal (e.g., Rel-15/16 terminal) different from the terminal to which CE or RedCap is applied may receive (or detect) PSS of SSB without distinguishing between PSS of SSB specified in Rel-15/16 and PSS of additional SSB. For example, another terminal may erroneously detect the additional SSB as the SSB specified in Rel-15/16, and may fail to synchronize.

In the embodiment of the present disclosure, for example, a method for expanding SSB coverage of a terminal supporting CE or RedCap and reducing synchronization failure in a Rel-15/16 terminal or a terminal in Rel 17 NR or later release, which does not support CE or RedCap, will be described.

For example, in the embodiment of the present disclosure, a terminal to which a technique of coverage enhancement (CE) may be applied (e.g., a terminal in Rel 17 NR or later release, which supports CE or RedCap) may receive additional SSB in addition to SSB (referred to as legacy SSB) developed in Rel-15/16 specification when receiving SSBs.

In this case, in the embodiment of the present disclosure, the additional SSB may, for example, include at least one signal of PSS, SSS, PBCH, and DMRS for PBCH. For example, the additional SSB may be mapped in a resource in which at least one of a temporal resource and a frequency resource is different from that of the legacy SSB. Further, at least one of a sequence and a signal mapping of the additional SSB may be different from that of the legacy SSB.

Thus, in the embodiment of the present disclosure, for example, the number of times of SSB reception in a terminal to which CE may be applied can be increased, and the receivable coverage can be expanded. Further, in the embodiment of the present disclosure, for example, another terminal (e.g., a Rel-15/16 terminal or a terminal in Rel 17 NR or later release, which does not support CE or RedCap) different from the terminal to which CE may be applied is less likely to erroneously detect additional SSB, which results in reducing synchronization failures.

Note that, in the following description, when the term "terminal" or "terminal 200", which will be described later, is simply referred for convenience, the term means a terminal to which CE may be applied. Further, when the term "another terminal" is simply referred for convenience, the term means, for example, a Rel-15/16 terminal or a terminal in Rel 17 NR or later release, which does not support tecuniques developed in the specification of CE or RedCap.

Further, in the following description, the term "signal mapping" in SSB may mean, for example, at least one of a mapping order of signals included in the SSB and the presence or absence of signals.

[Overview of Communication System]

A communication system according to the present embodiment includes base station 100 and terminal 200.

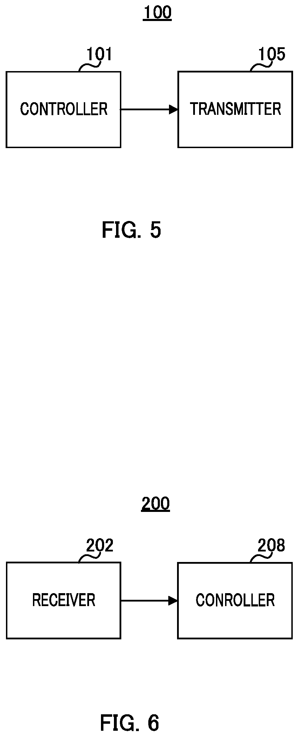

FIG. 5 is a block diagram illustrating an exemplary configuration of a part of base station 100 according to the present embodiment. In base station 100 illustrated in FIG. 5, controller 101 (e.g., corresponding to control circuitry) controls generation of a first synchronization signal block (legacy SSB) and a second synchronization signal block (additional SSB) of which at least one of the sequence and the signal mapping is different from that of the first synchronization signal block. Transmitter 105 (e.g., corresponding to transmission circuitry) transmits the first synchronization signal block and the second synchronization signal block.

FIG. 6 is a block diagram illustrating an exemplary configuration of a part of terminal 200. In terminal 200 illustrated in FIG. 6, receiver 202 (e.g., corresponding to reception circuitry) receives the first synchronization signal block (legacy SSB) and the second synchronization signal block (additional SSB) of which at least one of the sequence and the signal mapping is different from that of the first synchronization signal block. Controller 208 (e.g., corresponding to control circuitry) performs cell search based on the first synchronization signal block and the second synchronization signal block.

[Configuration of Base Station]

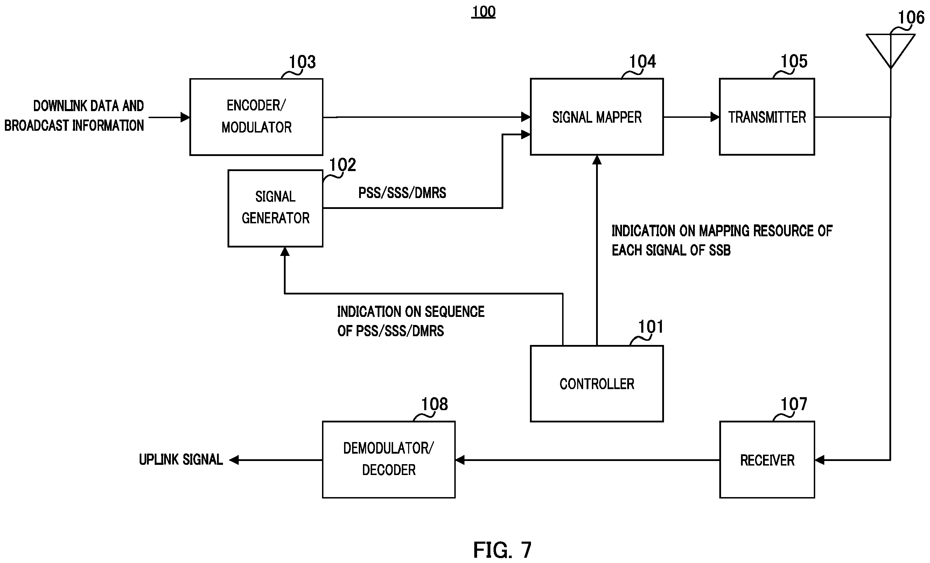

FIG. 7 is a block diagram illustrating an exemplary configuration of base station 100. In FIG. 7, base station 100 includes controller 101, signal generator 102, encoder/modulator 103, signal mapper 104, transmitter 105, antenna 106, receiver 107, and demodulator/decoder 108.

Controller 101 may, for example, determine at least one of a sequence and a signal mapping (e.g., a time resource and a frequency resource) of a signal (e.g., PSS, SSS, or DMRS for PBCH) included in legacy SSB and additional SSB or DMRS included in downlink data (e.g., Physical Downlink Shared Channel (PDSCH)). Controller 101 may, for example, output information (or indication) on the determined sequence of each signal to signal generator 102, and may output the information (or indication) on the determined mapping resource of each signal to signal mapper 104.

Signal generator 102 may, for example, generate PSS, SSS and DMRS based on the information on the sequence input from controller 101, and may output the generated signals to signal mapper 104.

Encoder/modulator 103 may perform error correction encoding and modulation on the downlink data and the broadcast information, and may output the modulated signals to signal mapper 104.

Signal mapper 104 may, for example, identify each channel or a resource of each signal based on the information defined or configured in advance (pre-defined or pre-configured information). Signal mapper 104 may map the signals input from signal generator 102 (e.g., PSS, SSS and DMRS) and the signals input from encoder/modulator 103 in a resource based on the information on the resource input from controller 101.

For example, signal mapper 104 may map PSS to a PSS resource, SSS to an SSS resource, DMRS to a PDSCH and to a DMRS resource in PBCH, downlink data to a PDSCH resource, and broadcast information to a PBCH resource.

Signal mapper 104 outputs the signals mapped in respective resources to transmitter 105.

Transmitter 105 performs, for example, radio transmission processing such as a frequency conversion using a carrier wave on the signals input from signal mapper 104, and output the signals after the radio transmission processing to antenna 106.

Antenna 106 radiates the signals (in other words, downlink signals) input from transmitter 105 toward terminal 200. Antenna 106 receives an uplink signal transmitted from terminal 200, and outputs the uplink signal to receiver 107.

The uplink signal may be, for example, a signal of a channel such as an uplink data channel (e.g., physical uplink shared channel (PUSCH)), uplink control channel (e.g., physical uplink control channel (PUCCH)), or random access channel (e.g., physical random access channel (PRACH)).

Receiver 107 performs radio reception processing such as a frequency conversion on the signal input from antenna 106, and outputs the signal after radio reception processing to demodulator/decoder 108.

Demodulator/decoder 108, for example, demodulates and decodes the signal input from receiver 107, and outputs the uplink signal.

[Configuration of Terminal]

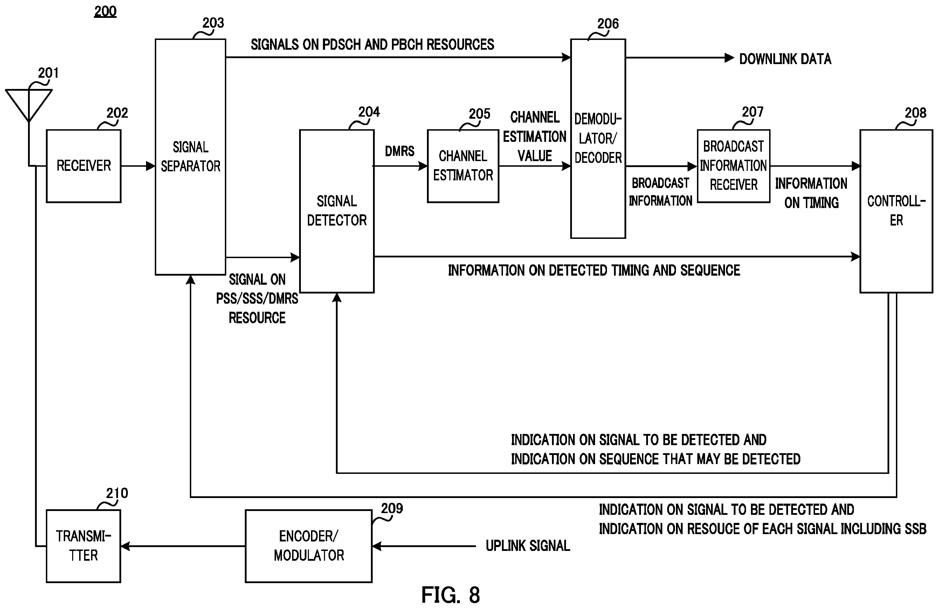

FIG. 8 is a block diagram illustrating an exemplary configuration of terminal 200.

In FIG. 8, terminal 200 includes antenna 201, receiver 202, signal separator 203, signal detector 204, channel estimator 205, demodulator/decoder 206, broadcast information receiver 207, controller 208, encoder/modulator 209, and transmitter 210.

Antenna 201 receives a downlink signal transmitted by base station 100, and outputs the downlink signal to receiver 202. In addition, antenna 201 radiates an uplink signal (e.g., uplink data signal) input from transmitter 210 to base station 100.

Receiver 202 performs radio reception processing such as frequency conversion on the signal input from antenna 201, and outputs the signal after radio reception processing to signal separator 203.

Signal separator 203 may, for example, identify each channel or a resource of each signal based on the information defined or configured in advance (pre-defined or pre-configured information). Based on the identified resource and the indication from controller 208, signal separator 203, for example, extracts (in other words, separates) signals mapped in PDSCH resource and PBCH resource from the signals input from receiver 202, outputs the signals to demodulator/decoder 206, and outputs signals mapped in PSS resource and SSS resource and signals mapped in DMRS resource in PDSCH and PBCH to signal detector 204.

Signal detector 204 may, for example, detect the sequence of PSS, SSS, and/or DMRS from the signal input from signal separator 203 in accordance with the indication from controller 208. Signal detector 204 may, for example, perform correlation detection between the information on the sequence input from controller 208 (e.g., a replica of the sequence) and the signal on each resource (e.g., any of resources of PSS, SSS, and DMRS) input from signal separator 203. Signal detector 204 may, for example, output the information on the sequence and the timing having a higher correlation (e.g., correlation value equal to or higher than a threshold value) in the correlation detection to controller 208. Further, signal detector 204 may, for example, output the detected DMRS to channel estimator 205.

Channel estimator 205 may, for example, perform channel estimation in PDSCH or PBCH using the DMRS input from signal detector 204, and may output the channel estimation value to demodulator/decoder 206.

Based on the channel estimation value input from channel estimator 205, demodulator/decoder 206, for example, performs demodulation and error correction decoding on the signal input from signal separator 203 (e.g., the signal on the PDSCH or PBCH resource) to obtain the downlink data or the broadcast information. Demodulator/decoder 206, for example, outputs the broadcast information obtained by the decoding to broadcast information receiver 207.

Broadcast information receiver 207, for example, extracts information (e.g., the information on the timing of each signal of the SSB) included in the broadcast information input from demodulator/decoder 206, and outputs the information to controller 208.

Controller 208 may, for example, perform control regarding cell search. For example, controller 208 may indicate the information on the signal to be separated or to be detected to signal separator 203 and signal detector 204. For example, controller 208 may output the information on the resource of each signal including SSB to signal separator 203 and may output the information on the sequence that may be detected to signal detector 204 based on the information defined or configured in advance (pre-defined or pre-configured information).

Further, for example, controller 208 may identify a cell ID (e.g., PCI) based on the sequence of the PSS or the SSS input from signal detector 204. Further, for example, controller 208 may identify the temporal position of the received SSB based on the information on the timing and the sequence of each detected signal input from signal detector 204 and the information on the timing input from broadcast information receiver 207.

Encoder/modulator 209 may, for example, perform encoding and modulation on an uplink signal (e.g., PUSCH, PUCCH or PRACH), and output the modulated signal to transmitter 210.

Transmitter 210 performs transmission processing such as a frequency conversion on the signal input from encoder/modulator 209, and outputs the signal after the transmission processing to antenna 201.

[Exemplary Operation of Base Station 100 and Terminal 200]

Next, an exemplary operation of base station 100 and terminal 200 described above will be described.

<Operation Example 1>

In Operation Example 1, for example, a sequence of at least one signal of PSS, SSS, and DMRS for PBCH mapped in each SSB is different between legacy SSB and additional SSB.

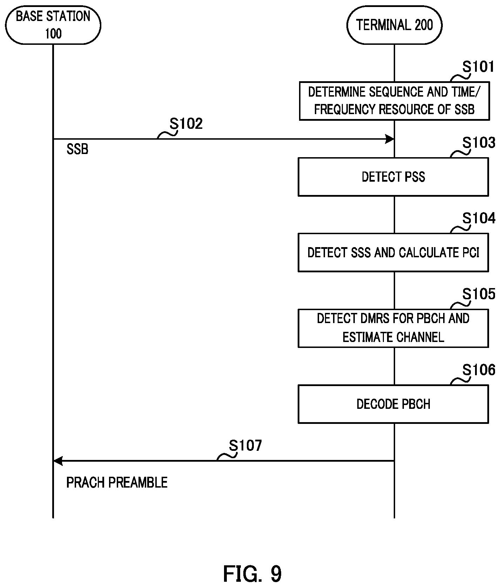

FIG. 9 is a flowchart illustrating an exemplary operation of base station 100 and terminal 200.

(S101)

Terminal 200 may, for example, determine a sequence and a resource (e.g., a time resource and a frequency resource) for legacy SSB and additional SSB based on pre-defined or pre-configured information.

(S102)

Base station 100 may, for example, transmit legacy SSB and additional SSB to terminal 200. For example, base station 100 may transmit the legacy SSB and the additional SSB on resources in which at least one of the temporal and the frequency resources is different between the legacy SSB and the additional SSB. Further, base station 100 may configure sequences in which at least one of PSS, SSS and PBCH is different between the legacy SSB and the additional SSB.

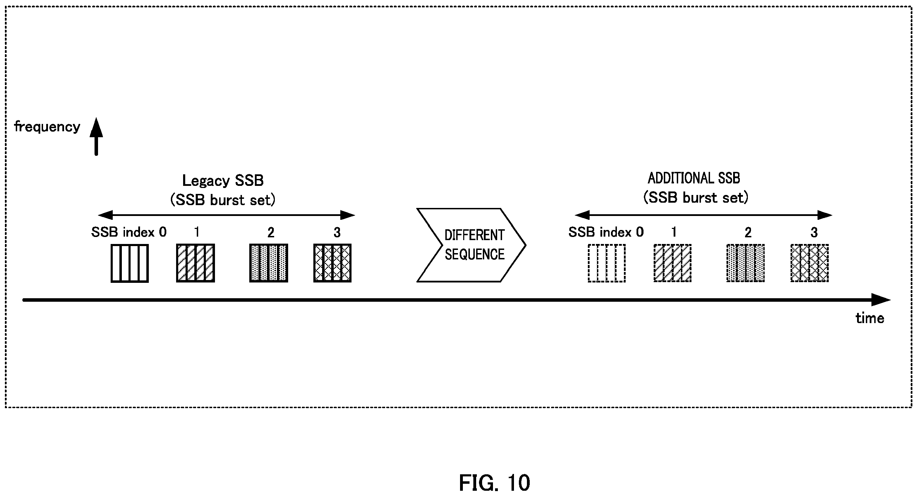

FIG. 10 illustrates an exemplary legacy SSB and additional SSB according to Operation Example 1. As illustrated in FIG. 10, a sequence may be different between the legacy SSB (SSB burst set) and the additional SSB (e.g., SSB burst set) in at least one of PSS, SSS, and DMRS for PBCH.

(S103)

Terminal 200 may, for example, attempt to detect PSS. For example, terminal 200 may attempt correlation detection based on a sequence relating to detection of PSS of legacy SSB (e.g., a replica of the sequence) and a sequence relating to detection of PSS of additional SSB (e.g., a replica of the sequence). For example, terminal 200 may identify the timing and the sequence of any PSS included in the legacy SSB burst set or the additional SSB burst set.

(S104)

Terminal 200 may, for example, attempt to detect SSS. For example, when the detected PSS in the process of S103 is of legacy SSB, terminal 200 may attempt correlation detection based on the sequence (e.g., a replica of the sequence) that may be used for SSS of legacy SSB. On the other hand, when the detected PSS in the process of S103 is of additional SSB, terminal 200 may attempt correlation detection based on the sequence (e.g., a replica of the sequence) that may be used for SSS of additional SSS. Accordingly, terminal 200 may identify any SSS included in the legacy SSB burst set or the additional SSB burst set.

When no SSS is detected, terminal 200 may, for example, return to the process of S103. When detecting SSS, terminal 200 may, for example, calculate a cell ID (e.g., PCI) based on the sequences of the identified PSS and SSS. In the following description, the term "calculate" may be replaced with "determine" or "identify".

(S105)

When the PSS detected in the process of S103 is of legacy SSB, terminal 200 may, for example, attempt to detect DMRS for PBCH based on the sequence (e.g., a replica of the sequence) that may be used for DMRS for PBCH of legacy SSB. Alternatively, when the PSS detected in the process of S103 is of additional SSB, terminal 200 may, for example, attempt to perform correlation detection based on the sequence (e.g., a replica of the sequence) that may be used for DMRS for PBCH of additional SSB. Accordingly, terminal 200 may identify the sequence of any DMRS for PBCH included in the legacy SSB burst set or the additional SSB burst set.

When no DMRS is detected, terminal 200 may, for example, return to the process of S103 or S104. When detecting DMRS, terminal 200 may, for example, calculate an SSB index (or some of the bits indicating the SSB index) based on the sequence of the identified DMRS for PBCH. Terminal 200 may also estimate a channel using the detected DMRS for PBCH, for example.

(S106)

Terminal 200 may decode PBCH, for example, based on the channel estimation value obtained in the process of S105. Further, terminal 200 may obtain a half frame bit and a radio frame number (e.g., SFN) included in the PBCH. In addition, terminal 200 may obtain some of the bits indicating an SSB index, for example.

Terminal 200 may, for example, identify the temporal location of the received SSB based on each value of the SSB index, the SFN, and the half frame bit.

(S107)

Terminal 200 may, for example, transmit a preamble in PRACH resource (e.g., a PRACH preamble) associated with the SSB index obtained in the processes of S105 and S106. At this time, when terminal 200 detects SSBs at a plurality of timings in the SSB burst set, terminal 200 may, for example, transmit a preamble based on the SSB index of the SSB having a higher received strength or received quality (e.g., the SSB having the highest received strength or received quality) among the plurality of SSBs.

The exemplary processing of base station 100 and terminal 200 has been described above.

As described above, terminal 200 that has grasped the sequence of additional SSB in the process of S101 can receive additional SSB in addition to legacy SSB, which can enhance the received quality of SSB and expand the receivable coverage.

Meanwhile, another terminal that does not grasp the sequence of additional SSB is less likely to detect the sequence of additional SSB, which can reduces the possibility that another terminal erroneously detects the additional SSB.

Next, an exemplary generation of additional SSB in Operation Example 1 will be described.

For example, a sequence of additional SSB may be, for example, a sequence obtained by rearranging a sequences of legacy SSB (e.g., elements of the sequence).

(Generation Example 1)

Base station 100 and terminal 200 may, for example, invert the order of the elements of sequence $d_{PSS}(n)$ of length 127 in PPS of legacy SSB to generate sequence $d_{PSS\_Add}(n)$ of length 127 in PSS of additional SSB. For example, sequence $d_{PSS\_Add}(n)$ of PSS of additional SSB may be a sequence obtained by inverting the order of the elements of sequence $d_{PSS}(n)$ of PSS of legacy SSB in accordance with following Equation 1.

$$d_{\text{PSS\_Add}}(n) = d_{\text{PSS}}(126 - n) \quad (0 \leq n < 127) \qquad \dots \text{(Equation 1)}$$

(Generation Example 2)

Base station 100 and terminal 200 may, for example, perform cyclic-shift on the elements of sequence $d_{PSS}(n)$ of length 127 in PSS of legacy SSB to generate sequence $d_{PSS\_Add}(n)$ of length 127 in PSS of additional SSB. For example, sequence $d_{PSS\_Add}(n)$ of PSS of additional SSB may be a sequence obtained by performing cyclic-shift on the elements of sequence $d_{PSS}(n)$ of PSS of legacy SSB in accordance with following Equation 2.

$$d_{\text{PSS\_Add}}(n) = d_{\text{PSS}}\big((n + \Delta) \bmod 127\big) \quad (0 \leq \{n, \Delta\} < 127) \qquad \dots \text{(Equation 2)}$$

(Generation Example 3)

Base station 100 and terminal 200 may, for example, intersect or interleave the elements of sequence $d_{PSS}(n)$ of length 127 in PSS of legacy SSB to generate sequence $d_{PSS\_Add}(n)$ of length 127 in PSS of additional SSB.

For example, sequence $d_{PSS\_Add}(n)$ of PSS of additional SSB may be configured by $d_{PSS}(n)$ divided into a certain number (e.g., two), and each division may be mapped to $d_{pss\_add}(n)$ at equal intervals. For example, $d_{PSS\_Add}(n)$ sequence of PSS of additional SSB may be a sequence obtained by interleaving the elements of sequence $d_{PSS}(n)$ of PSS of legacy SSB in accordance with following Equation 3.

$$d_{\text{PSS\_Add}}(n) = \begin{cases} d_{\text{PSS}}(2n) & (0 \leq n < 64) \\ d_{\text{PSS}}(2(n - 64) + 1) & (64 \leq n < 127) \end{cases} \qquad \dots \text{(Equation 3)}$$

Note that the method for intersecting and interleaving the sequence order in Generation Example 3 is not limited to the method based on Equation 3, and another method may be applied.

Further, in each of Equations 1 to 3, n and $\Delta$ may be integers.

According to Generation Examples 1 to 3, additional SSB is generated based on the sequence defined for legacy SSB; therefore, there is no need to newly generate a sequence different from the sequence defined for legacy SSB, which results in reducing the processing load in base station 100 and terminal 200.

Note that, in Generation Examples 1 to 3, the method for generating PSS of additional SSB has been described as an example, but SSS or DMRS for PBCH of additional SSB may be generated by the same method as PSS. For example, each of Generation Examples 1 to 3 is not limited to be applied to PSS, and may be applied to sequence generation of SSS or DMRS for PBCH to be included in additional SSB. For example, in additional SSB, a signal to which a sequence different from that of the legacy SSB is applied may be at least one of SSS and DMRS for PBCH.

For example, the sequence of the PSS in additional SSB may be different from that of the PSS in legacy SSB, and the sequences of the SSS and the DMRS for PBCH in additional SSB may be in common with the SSS and the DMRS of PBCH in legacy SSB. Thus, for example, another terminal different from terminal 200 is less likely to detect PSS of additional SSB when detecting PSS, and does not need to perform a process of detecting SSS and DMRS for PBCH of additional SSB; therefore, the power consumption in another terminal can be reduced. In addition, configuring a sequence of SSS and DMRS for PBCH for additional SSB in common with the sequence of legacy SSB can reduce the change from the standards such as Rel-15/16.

Further, for example, in additional SSB, the sequence of PSS and SSS may be different from the sequence of PSS and SSS of legacy SSB, and the sequence of DMRS for PBCH may be in common with the sequence of DMRS for PBCH of legacy SSB. Thus, for example, another terminal different from terminal 200 is less likely to detect PSS and/or SSS of additional SSB when detecting PSS and/or SSS, and does not need to perform a process of detecting DMRS for PBCH of additional SSB; therefore, the power consumption in another terminal can be reduced. In addition, configuring a sequence for DMRS for PBCH that is common between the additional SSB and the legacy SSB can reduce the change from the standards such as Rel-15/16.

Further, for example, the sequences of PSS, SSS, and DMRS for PBCH of additional SSB may be different from the sequences of PSS, SSS, and DMRS for PBCH of legacy SSB. This can reduce erroneous detection of additional SSB in another terminal different from terminal 200.

Further, a sequence different from that of legacy SSB is applied to PSS of additional SSB, but the present disclosure is not limited thereto, and the sequence different from that of legacy SSB may be applied to any one of or a combination of a plurality of PPS, SSS and DMRS for PBCH included in additional SSB.

Further, for example, among PSS, SSS and DMRS for PBCH included in additional SSB, a signal to which a sequence different from that of legacy SSB is applied may be dynamically switched.

Further, in Generation Examples 1 to 3, a case has been described in which a sequence for additional SSB is generated based on the sequence of legacy SSB, but the present disclosure is not limited thereto. For example, the sequence for one of legacy SSB and additional SSB may be a sequence obtained by rearranging the elements of the sequence of the other one of the legacy SSB and the additional SSB. For example, a sequence of legacy SSB may be generated based on the sequence of additional SSB.

<Operation Example 2>

In Operation Example 2, for example, signal mapping (e.g., the order of the signal mapping) of PSS, SSS, and PBCH may be different between legacy SSB and additional SSB. For example, at least one of the positions of SSS and PBCH (or DMRS for PBCH) with respect to PSS in additional SSB resource may be different from that of legacy SSB.

The processing of base station 100 and terminal 200 may be the same as the processing illustrated in FIG. 9, for example.

(S101)

Terminal 200 may, for example, determine a sequence and a resource (e.g., a time resource and a frequency resource) for legacy SSB and additional SSB based on pre-defined or pre-configured information.

(S102)

Base station 100 may, for example, transmit legacy SSB and additional SSB to terminal 200. For example, base station 100 may transmit the legacy SSB burst set and the additional SSB burst set on resources in which at least one of the temporal and the frequency resource is different between the legacy SSB and the additional SSB. Further, base station 100 may configure at least one of the positions of SSS and PBCH with respect to PSS to be different between the legacy SSB and the additional SSB. Note that an exemplary signal mapping in additional SSB in Operation Example 2 will be described later.

(S103)

Terminal 200 may, for example, attempt to detect PSS. For example, terminal 200 may attempt correlation detection based on a sequence relating to detection of PSS of legacy SSB (e.g., a replica of the sequence). For example, terminal 200 may identify the timing and the sequence of any PSS included in the legacy SSB burst set or the additional SSB burst set.

(S104)

Terminal 200 may, for example, attempt to detect SSS. For example, terminal 200 may attempt correlation detection assuming (or expecting) the positions of SSB resources when the PSS detected in the process of S103 is of legacy SSB and when the PPS is of additional SSB. Accordingly, terminal 200 may identify any SSS included in the legacy SSB burst set or the additional SSB burst set.

When no SSS is detected, terminal 200 may, for example, return to the process of S103. When detecting SSS, terminal 200 may, for example, determine (calculate) a cell ID (e.g., PCI) based on the sequence of the identified PSS and SSS.

(S105)

Terminal 200 may, for example, attempt to detect DMRS for PBCH. For example, terminal 200 may attempt to perform correlation detection assuming (or expecting) the positions of PBCH resources of both the legacy SSB and the additional SSB. Accordingly, terminal 200 may identify a sequence of any DMRS for PBCH included in the legacy SSB burst set or the additional SSB burst set.

When no DMRS is detected, terminal 200 may, for example, return to the process of S103 or S104. When detecting DMRS, terminal 200 may, for example, calculate SSB index (or some of the bits indicating the SSB index) based on the sequence of the identified DMRS for PBCH. Terminal 200 may also estimate a channel using the detected DMRS for PBCH, for example.

(S106)

Terminal 200 may, for example, decode PBCH based on the PBCH resource and the channel estimation value obtained in the process of S105. Further, terminal 200 may obtain a half frame bit and a radio frame number (e.g., SFN) included in the PBCH. In addition, terminal 200 may obtain some of the bits indicating an SSB index, for example.

Terminal 200 may, for example, identify the temporal location of the received SSB based on each value of the SSB index, the SFN, and the half frame bit.

(S107)

Similarly to Operation Example 1, terminal 200 may transmit a preamble in PRACH resource associated with the SSB index obtained in the processes of S105 and S106, for example. At this time, when terminal 200 detect SSBs at a plurality of timings in the SSB burst set, terminal 200 may, for example, transmit a preamble based on the SSB index of the SSB having a higher received strength or received quality (e.g., the SSB having the highest received strength or received quality) among the plurality of SSBs.

The exemplary processing of base station 100 and terminal 200 has been described above.

As described above, terminal 200 that has grasped the sequence of the additional SSB in the process of S101 can receive the additional SSB in addition to the legacy SSB, which can enhance the received quality of SSB and expand the receivable coverage.

Meanwhile, another terminal that does not grasp the sequence of the additional SSB is less likely to detect the sequence of the additional SSB, which can reduces the possibility that another terminal erroneously detects the additional SSB.

Next, an exemplary signal mapping of additional SSB in Operation Example 2 will be described.

(Mapping Example 1)

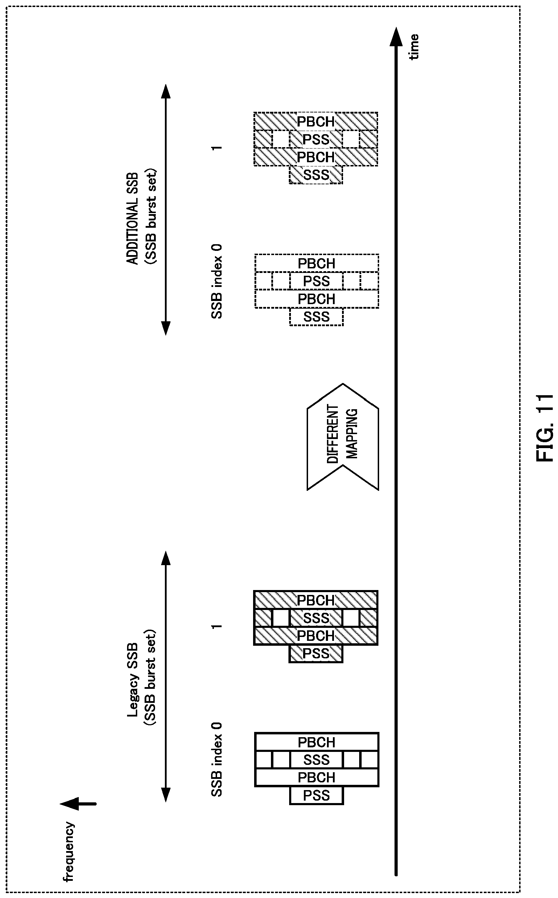

FIG. 11 illustrates an exemplary configuration of legacy SSB and additional SSB according to Mapping Example 1.

As illustrated in FIG. 11, as an exemplary position relation between PSS, SSS, and PBCH in additional SSB resource, SSS may be mapped to the zeroth symbol of the additional SSB, and PSS is mapped to the second symbol. Note that the leading symbol of each SSB in additional SSB (e.g., SSB burst set) is referred to as a zeroth symbol.

As described above, in Mapping Example 1, the signal mapping order of PSS and SSS is opposite between the legacy SSB and the additional SSB. In other words, the position at which the PSS is mapped and the position at which the SSS is mapped are switched between the legacy SSB and the additional SSB.

Thus, the signals mapped to the zeroth symbol and the second symbol are different between the legacy SSB and the additional SSB, for example, as described in FIG. 11; therefore, the legacy SSB and the additional SSB can be distinguished from each other. Further, for example, the sequence of the legacy SSB and the sequence of the additional SSB may be configured in common. Thus, the change from the standards such as Rel-15/16 can be reduced. Furthermore, the common sequence between the legacy SSB and the additional SSB allows in-phase combining (e.g., soft-combining) of SSBs in terminal 200.

(Mapping Example 2)

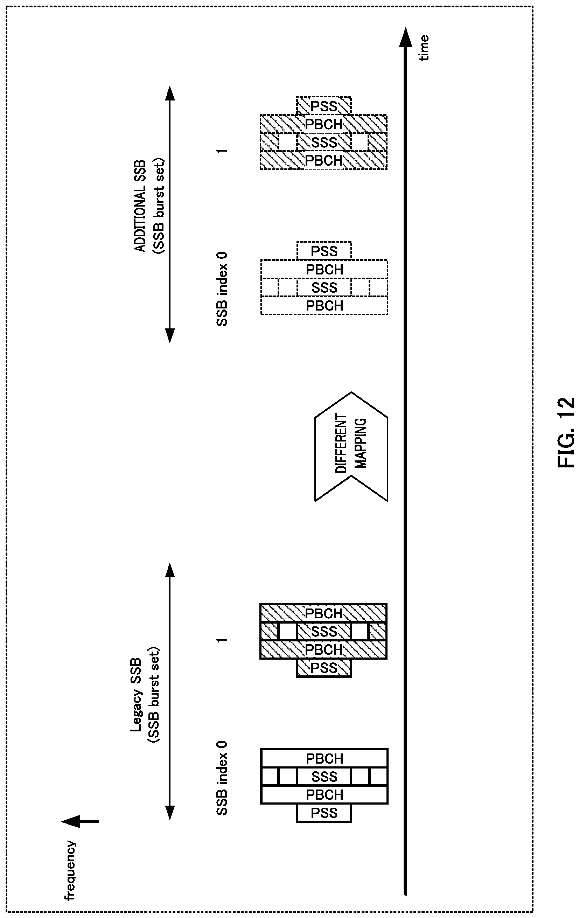

FIG. 12 is a diagram illustrating an exemplary configuration of legacy SSB and additional SSB in Mapping Example 2.

In FIG. 12, for example, SSS may be mapped to the first symbol, PSS may be mapped to the third symbol, and PBCHs may be mapped to the zeroth to second symbols of the additional SSB. Note that the leading symbol of each SSB in additional SSB (e.g., SSB burst set) is referred to as a zeroth symbol.

Thus, in Mapping Example 2, for example, the signal mapping order of PSS, SSS and PBCH is opposite between the legacy SSB and the additional SSB.

Thus, for example, as described in FIG. 12, the signals mapped to the zeroth symbol and the second symbol are different between the legacy SSB and the additional SSB; therefore, the legacy SSB and the additional SSB can be distinguished from each other. Further, for example, the sequence of the legacy SSB and the sequence of the additional SSB may be configured in common. Thus, the change from the standards such as Rel-15/16 can be reduced. Furthermore, the common sequence between the legacy SSB and the additional SSB allows in-phase combining (e.g., soft-combining) of SSBs in terminal 200.

Further, in Operation Example 2, similarly to legacy SSB, SSS is mapped so as to be surrounded by PBCHs in additional SSB; therefore, the interference to the SSS is reduced, and the performance of SSS decoding can be enhanced.

Mapping Example 1 and Mapping Example 2 have been described above.

Note that the positional relation between signals in additional SSB is not limited to Mapping Example 1 and Mapping Example 2, and the position relation in additional SSB may be different from the position relation (e.g., mapping in at least one of the time resource and the frequency resource) between signals in legacy SSB.

Accordingly, for the generation of additional SSB, there is no need to newly generate a sequence different from the sequence defined for legacy SSB, which results in reducing the processing load in base station 100 and terminal 200.

Note that the case is not limited to the case where the sequence configured for at least one of the signals included in additional SSB is the same as the sequence of the signal included in legacy SSB, and similarly to Operation Example 1, a sequence different from the sequence of the legacy SSB may be configured.

<Operation Example 3>

In Operation Example 3, for example, additional SSB may include some of PSS, SSS, and PBCH. For example, in additional SSB, among PSS, SSS and PBCH, PBCH may be mapped (or transmitted), and PSS and SSS may not be mapped (or transmitted). In other words, in Operation Example 3, the signal mapping (or signal configuration) of additional SSB may be different from the signal mapping of legacy SSB.

The processing of base station 100 and terminal 200 may be the same as the processing illustrated in FIG. 9, for example.

(S101)

Similarly to Operation Example 2, terminal 200 may, for example, determine a sequence and a resource (e.g., a time resource and a frequency resource) for legacy SSB and additional SSB based on pre-defined or pre-configured information. Note that the same sequence as the legacy SSB may be used for the sequence of the additional SSB, for example.

(S102)

Base station 100 may, for example, transmit legacy SSB and additional SSB to terminal 200. For example, base station 100 may transmit the legacy SSB burst set and the additional SSB burst set on resources in which at least one of the temporal and the frequency resources is different between the legacy SSB and the additional SSB. Further, base station 100 may transmit PBCH in the additional SSB, and may not transmit PSS and SSS.

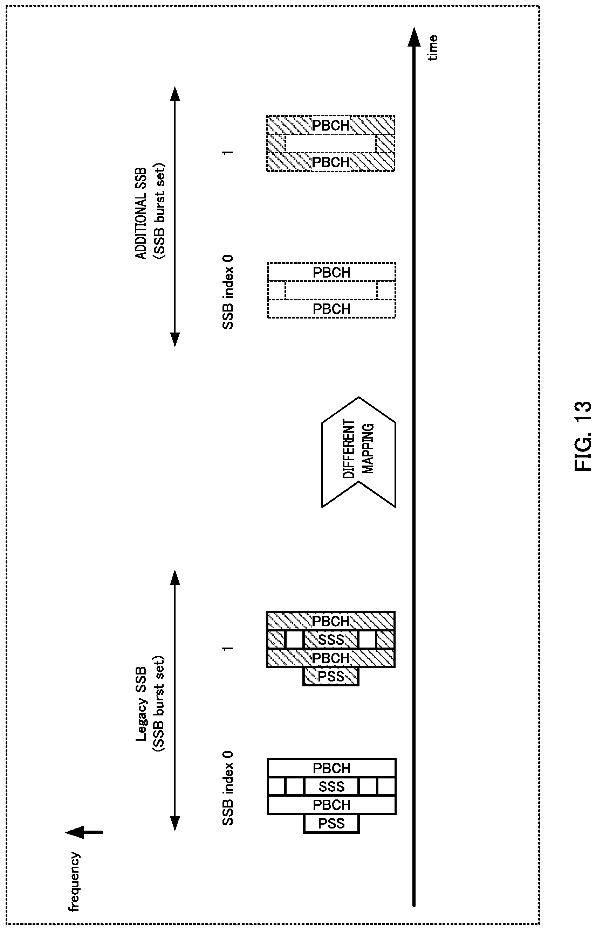

FIG. 13 illustrates an exemplary legacy SSB and additional SSB according to Operation Example 3. As illustrated in FIG. 13, PSS, SSS and PBCH may be transmitted in legacy SSB (e.g., SSB burst set). On the other hand, as illustrated in FIG. 13, PBCHs may be transmitted and no PSS and no SSS may be transmitted in additional SSB (e.g., SSB burst set). In other words, the signal mapping of the SSB (e.g., the presence or absence of the mapping of signals) may be different between the legacy SSB and the additional SSB.

(S103)

Terminal 200 may, for example, attempt to detect PSS. For example, terminal 200 may attempt correlation detection based on a sequence relating to detection of PSS of legacy SSB (e.g., a replica of the sequence). For example, terminal 200 may identify the timing and the sequence of any PSS included in the legacy SSB burst set.

(S104)

Terminal 200 may, for example, attempt to detect SSS. Thus, terminal 200 may, for example, identify the sequence of any SSS included in the legacy SSB burst set.
When no SSS is detected, terminal 200 may, for example, return to the process of S103. For example, when detecting SSS, terminal 200 may, for example, calculate a cell ID (e.g., PCI) based on the sequence of the identified PSS and SSS.

(S105)

Terminal 200 may, for example, attempt to detect DMRS for PBCH. For example, terminal 200 may attempt to perform correlation detection assuming (or expecting) the positions of PBCH resources of both the legacy SSB and the additional SSB. Accordingly, terminal 200 may identify a sequence of any DMRS for PBCH included in the legacy SSB burst set or the additional SSB burst set.
When no DMRS is detected, terminal 200 may, for example, return to the process of S103 or S104. When detecting DMRS, terminal 200 may, for example, calculate an SSB index (or some of the bits indicating the SSB index) based on the sequence of the identified DMRS for PBCH. Terminal 200 may also estimate a channel using the detected DMRS for PBCH, for example.

(S106)

Terminal 200 may, for example, decode PBCH based on the PBCH resource of either or both the legacy SSB and the additional SSB obtained in the process of S105 and the channel estimation value. Further, terminal 200 may obtain a half frame bit and a radio frame number (e.g., SFN) included in the PBCH. In addition, terminal 200 may obtain some of the bits indicating an SSB index, for example.
Terminal 200 may, for example, identify the temporal location of the received SSB based on each value of the SSB index, the SFN, and the half frame bit.

(S107)

Similarly to Operation Example 1, terminal 200 may, for example, transmit a preamble in PRACH resource (e.g., a PRACH preamble) associated with the SSB index obtained in the processes of S 105 and S 106.
As described above, terminal 200 that has grasps the signal configuration of the additional SSB in the process of S101 can receive the additional SSB in addition to the legacy SSB, which can enhance the received quality of SSB (e.g., PBCH) and expand the receivable coverage.
Meanwhile, another terminal that does not grasp the signal configuration of the additional SSB does not detect the PSS and the SSS of the additional SSB, which can reduces the possibility that another terminal erroneously detects the additional SSB.
Further, according to Operation Example 3, the generation process and/or the detection process of PSS and SSS for additional SSB are not performed on base station 100 and terminal 200, and thus increase of processing load can be suppressed.
In addition, according to Operation Example 3, for example, no PSS and no SSS are mapped in additional SSB, and thus the resource overhead caused by additional SSB can be reduced.
Note that the sequence configured to DMRS for PBCH included in additional SSB is not limited to be in common with DMRS for PBCH included in legacy SSB, and, similarly to Operation Example 1, a sequence different from the sequence of legacy SSB may be configured.

<Operation Example 4>

In Operation Example 4, for example, additional SSB may include some of PSS, SSS and PBCH. For example, in additional SSB, among PSS, SSS and PBCH, PSS may be mapped (or transmitted), and SSS and PBCH may not be mapped (or transmitted). In other words, the signal mapping (or signal configuration) of additional SSB may be different from the signal mapping of legacy SSB in Operation Example 4.

The processing of base station 100 and terminal 200 may be the same as the processing illustrated in FIG. 9, for example.

(S101)

Similarly to Operation Example 2, terminal 200 may, for example, determine a sequence and a resource (e.g., a time resource and a frequency resource) for legacy SSB and additional SSB based on pre-defined or pre-configured information. Note that the common sequence may be used between the legacy SSB and the additional SSB, for example.

(S102)

Base station 100 may, for example, transmit legacy SSB and additional SSB to terminal 200. For example, base station 100 may transmit the legacy SSB burst set and the additional SSB burst set on resources in which at least one of the temporal and the frequency resources is different between the legacy SSB and the additional SSB. Further, base station 100 may transmit PSS and may not transmit SSS and PBCH in additional SSB.

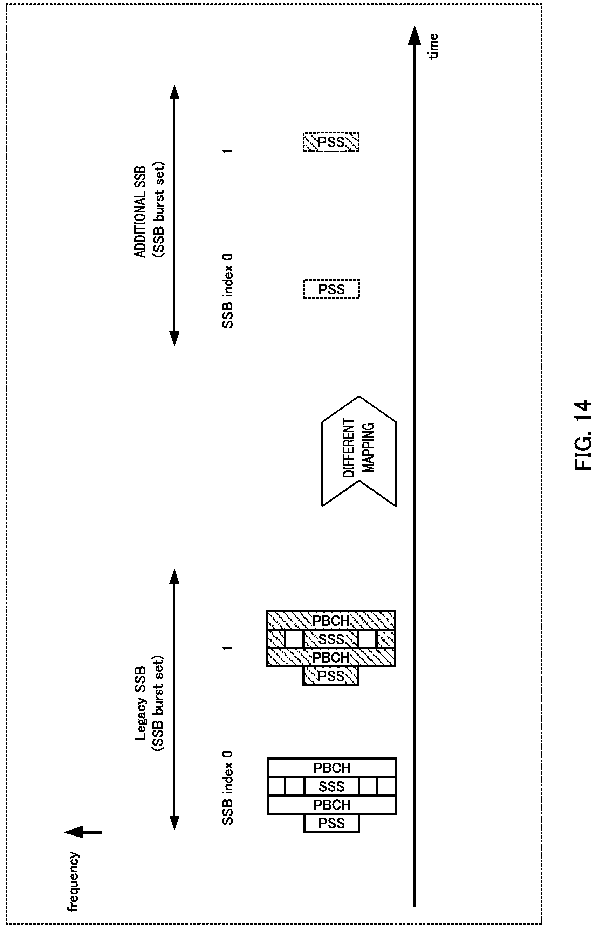

FIG. 14 illustrates an exemplary legacy SSB and additional SSB according to Operation Example 4. As illustrated in FIG. 14, in the legacy SSB (e.g., SSB burst set), PSS, SSS and PBCH may be transmitted. On the other hand, as illustrated in FIG. 14, PSS may be transmitted, and no SSS and no PBCH may be transmitted in the additional SSB (e.g., SSB burst set). In other words, the signal mapping of SSB (e.g., the presence or absence of the mapping of signals) may be different between the legacy SSB and the additional SSB.

(S103)

Terminal 200 may, for example, attempt to detect PSS. For example, terminal 200 may attempt correlation detection based on a sequence relating to detection of PSS of legacy SSB (e.g., a replica of the sequence). For example, terminal 200 may specify the timing and the sequence of any PSS included in the legacy SSB burst set or additional SSB.

(S104)

Terminal 200 may, for example, attempt to detect SSS. For example, terminal 200 may attempt to perform correlation detection assuming (or expecting) the positions of SSS resources for both cases where the PSS detected in the process of S103 is of legacy SSB and the PSS is of additional SSB. Accordingly, terminal 200 may identify a sequence of any SSS included in the legacy SSB burst.

When no SSS is detected, terminal 200 may, for example, return to the process of S103. When detecting SSS, terminal 200 may, for example, calculate a cell ID (e.g., PCI) based on the sequence of the identified PSS and SSS.

(S105)

Terminal 200 may, for example, attempt to detect DMRS for PBCH. For example, terminal 200 may attempt to perform correlation detection assuming (or expecting) the positions of the PBCH resource of the legacy SSB. Accordingly, terminal 200 may identify a sequence of any DMRS for PBCH included in the legacy SSB burst set.

When no DMRS is detected, terminal 200 may, for example, return to the process of S103 or S104. When detecting DMRS, terminal 200 may, for example, calculate SSB index (or some of the bits indicating the SSB index) based on the sequence of the identified DMRS for PBCH. Further, terminal 200 may also estimate a channel using the detected DMRS for PBCH, for example.

(S106)

Terminal 200 may, for example, decode PBCH based on the PBCH resource of the legacy SSB obtained in the process of S105 and the channel estimation value. Further, terminal 200 may obtain a half frame bit and a radio frame number (e.g., SFN) included in the PBCH. In addition, terminal 200 may obtain some of the bits indicating an SSB index, for example.

Terminal 200 may, for example, identify the temporal location of the received SSB based on each value of the SSB index, the SFN, and the half frame bit.

(S107)

Similarly to Operation Example 1, terminal 200 may transmit a preamble in PRACH resource (e.g., a PRACH preamble) associated with the SSB index obtained in the processes of S105 and S106, for example.

As described above, terminal 200 that has grasps the sequence of the additional SSB in the process of S101 can receive the additional SSB in addition to the legacy SSB, which can enhance the received quality of SSB (e.g., PSS) and expand the receivable coverage.

Meanwhile, another terminal that does not grasp the signal configuration of the additional SSB does not detect the SSS and the PBCH of the additional SSB, which can reduces the possibility that another terminal erroneously detects the additional SSB.

Further, according to Operation Example 4, the generation process and/or detection process of SSS and PBCH for additional SSB are not performed on base station 100 and terminal 200, and thus increase of processing load can be suppressed.

In addition, according to Operation Example 4, for example, no SSS and no PBCH are mapped in additional SSB, and thus the resource overhead caused by additional SSB can be reduced. Further, terminal 200 may buffer only PSS for the in-phase combining (e.g., soft-combining) of legacy SSB and additional SSB, and may not buffer SSS and PBCH, which results in reducing the memory size.

Note that the sequence configured to PSS included in additional SSB is not limited to be in common with PSS included in legacy SSB, and, similarly to Operation Example 1, a sequence different from the sequence of legacy SSB may be configured.

Next, an exemplary arrangement of PSS in additional SSB will be described.

(Mapping Example 1)

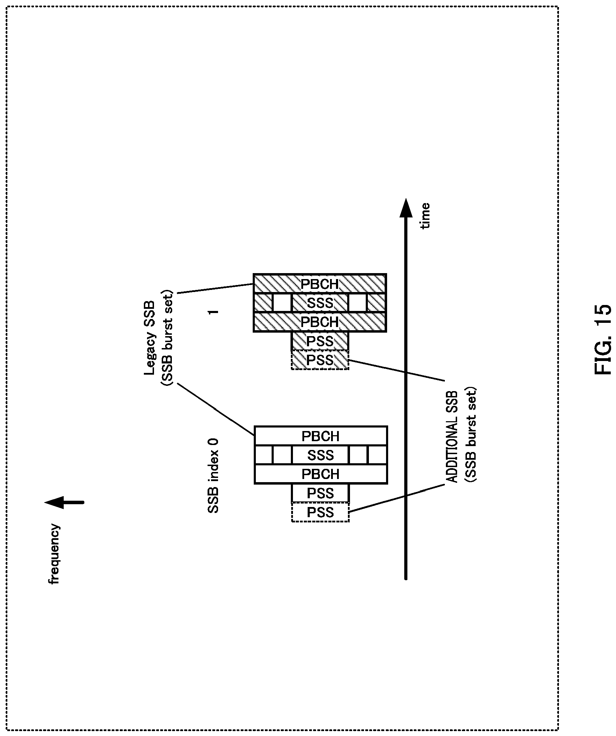

FIG. 15 illustrates exemplary mapping of legacy SSB and additional SSB in Mapping Example 1.

As illustrated in FIG. 15, the PSS of additional SSB may be mapped in a resource (e.g., a previous symbol) temporally close to the PSS of legacy SSB.

Thus, terminal 200 can shorten the time until the completion of detecting PSS even when performing reception processing with the combination of legacy SSB and additional SSB.

Note that the time resource (e.g., symbol) to which PSS of additional SSB is mapped is not limited to one symbol prior to the symbol to which PSS of legacy SSB is mapped. For example, the time until the completion of detecting PSS can be shorter as the mapped symbol of PSS of additional SSB is closer to the mapped symbol of PSS of legacy SSB. For example, the mapping position of PSS of additional SSB may be in a time resource within a threshold symbol from a time resource to which PSS of legacy SSB is mapped. The threshold symbol may be determined, for example, based on a parameter configured to terminal 200 such as an allowable delay may be determined based on a value indicated from base station 100, or may be per-defined.

(Mapping Example 2)

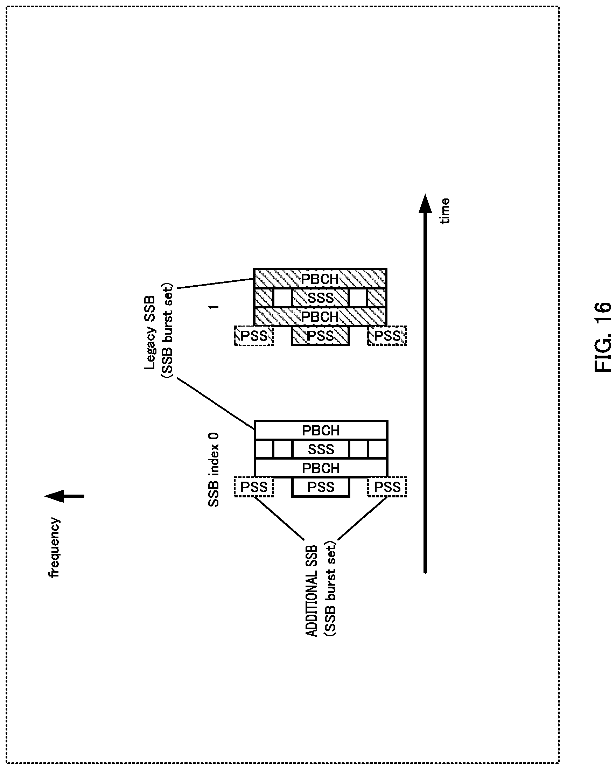

FIG. 16 illustrates exemplary mapping of legacy SSB and additional SSB in Mapping Example 2.

As illustrated in FIG. 16, the PSS of additional SSB may be, for example, mapped in a time resource (e.g., symbol) in common (e.g., the identical) with the PSS of legacy SSB, and may be mapped in a frequency resource different from the PSS of the legacy SSB. In other words, frequency division multiplexing (FDM) may be performed on the PSS of the additional SSB in the same time resource as the PSS of the legacy SSB.

Thus, terminal 200 can shorten the time until the completion of detecting PSS even when performing reception processing with the combination of legacy SSB and additional SSB. For example, in the example illustrated in FIG. 16, PSSs of both legacy SSB and additional SSB are mapped to the same symbol, and thus the time until the completion of detecting PSS can be shorter than Mapping Example 1.

Further, for example, in a symbol in which the PSS of additional SSB and the PSS of legacy SSB are FDMed, non-transmission of a signal different from PSS may be configured in a frequency resource within a threshold subcarrier from a frequency resource in which PSS of additional SSB is mapped. For example, a resource (e.g., referred to as a guard resource or an additional guard resource) in which a signal different from PSS is not allocated may be configured in a frequency resource in the vicinity of PSS of additional SSB. This can reduce the interference in PSS reception.

Note that PSS of additional SSB is not limited to be mapped in two frequency resources as illustrated in FIG. 16, and may be mapped in three or more frequency resources. Further, PSS of additional SSB is not limited to be mapped in the frequency resources at both ends of the PPS of the legacy SSB as illustrated in FIG. 16, and may be mapped in the frequency resource at one end of the PSS of the legacy SSB.

The exemplary mapping ofPSS in additional SSB has been described above.

Note that Mapping Example 1 and Mapping Example 2 may be combined with each other. For example, PSS of additional SSB may be mapped in the resource where both time resource and frequency resource are different from those of PSS of legacy SSB.

In addition, the mapping of PSS of additional SSB has been described in Operation Example 4, but the signal transmitted in additional SSB is not limited to PSS, and at least one of PSS, SSS, PBCH and DMRS for PBCH may be transmitted. For example, SSS may be transmitted, and PSS and PBCH may not be transmitted. For the mapping of SSS of additional SSB, the above-described mapping of PSS may be applied. This can expand the reception coverage of SSS.

<Operation Example 5>

In Operation Example 5, an exemplary mapping resource of additional SSB will be described. Note that Operation Example 5 may be combined with any one of Operation Examples 1 to 4, for example.

[Variations in Mapping Method for Additional SSB]

Variations in a mapping method for additional SSB will be described below.

(Variation 1)

Additional SSB may be mapped in a time resource different from the time resource in which legacy SSB is mapped, for example.

This mapping allows base station 100 to transmit legacy SSB and additional SSB on different time resources from each other, so that the high transmission power allocated to each SSB in the time resource can be configured compared to, for example, the method of FDMing legacy SSB and additional SSB. Therefore, the received quality of each SSB in terminal 200 can be enhanced.

(Variation 2)

Additional SSB may be mapped in a frequency resource different from the frequency resource in which legacy SSB is mapped, for example.

For example, legacy SSB in a Primary cell (Pcell) may be transmitted on a subcarrier indicated by a defined synchronization raster (SS raster). On the other hand, additional SSB may be transmitted on another subcarrier different from the subcarrier indicated by the SS raster. Alternatively, a raster for additional SSB may be defined, and additional SSB may be transmitted on the subcarrier indicated by the raster for additional SSB.

This can reduce the possibility that another terminal (e.g., Rel-15/16 terminal) different from terminal 200 erroneously detects additional SSB, for example.

(Variation3)

Time division multiplexing (TDM) may be performed on additional SSB in the requency resource in common with (e.g., identical to) the frequency resource to which legacy SSB is mapped. This mapping eliminates the need for terminal 200 to monitor a plurality of frequency bands when detecting legacy SSB and additional SSB, so that the processing load can be reduced.

Further, additional SSB may be, for example, FDMed in a time resource in commo with (e.g., identical to) the time resource in which legacy SSB is mapped. This mapping allows terminal 200 to shorten the time of detecting legacy SSB and additional SSB.

Variations 1 to 3 have been described above.

Note that Variation 1 and Variation 2 may be combined with each other, for example. For example, additional SSB may be mapped in a time resource and a frequency resource different from both the time resource and the frequency resource in which legacy SSB is mapped.

[Multiplexing with Type 0 PDCCH]

Additional SSB may be TDMed or FDMed with both or eather Type 0 PDCCH (also referred to as Type0-PDCCH, CORESET 0 (COntrol REsource SET 0) or search space 0 resource and/or PDSCH resource allocated by the type 0 PDCCH.

For example, when base station 100 configures two or three to the value of an "SS/PBCH block and CORESET multiplexing pattern", that is, when the frequency resource of the above-described type 0 PDCCH or PDSCH is different from the frequency resource of legacy SSB, additional SSB may be TDMed in the frequency resource in common with the above-described type 0 PDCCH or PDSCH. This allows terminal 200 to receive the additional SSB, the type 0 PDCCH, and the PDSCH within a relatively narrow frequency band.

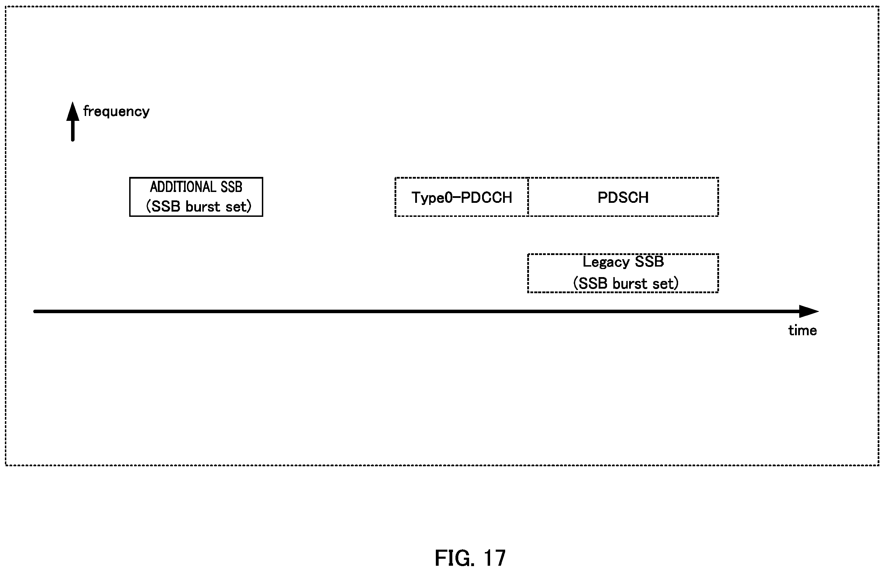

FIG. 17 illustrates an example of configuring two to the value of SS/PBCH block and CORESET multiplexing pattern. In the example illustrated in FIG. 17, additional SSB is TDMed in the frequency resource in common with the type 0 PDCCH and the PDSCH allocated by the type 0 PDCCH.

Further, for example, when base station 100 configures one to the value of the SS/PBCH block and the CORESET multiplexing pattern, that is, when the time resource of the above-described type 0 PDCCH or PDSCH is different from the time resource of legacy SSB, additional SSB may be FDMed in the time resource in common with the above-described type 0 PDCCH or PDSCH. This allows terminal 200 to receive the additional SSB, the type 0 PDCCH, and the PDSCH in a relatively short time.

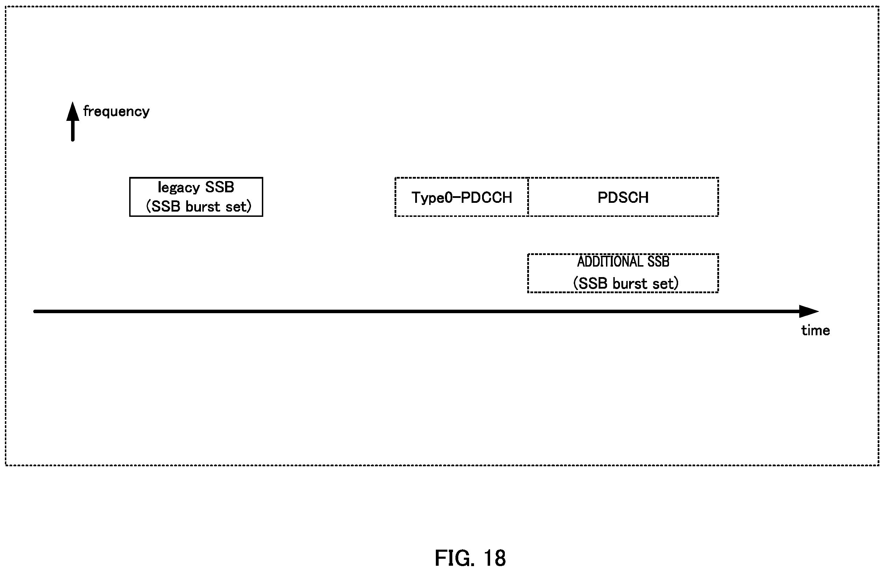

FIG. 18 illustrates an example of configuring one to the value of SS/PBCH block and CORESET multiplexing pattern. Note that, in the example illustrated in FIG. 18, additional SSB is FDMed in the time resource in common with the PDSCH allocated by the type 0 PDCCH, but the example is not limited thereto, and additional SSB is FDMed in the time resource in common with the type 0 PDCCH.

Further, the method for multiplexing additional SSB and type 0 PDCCH may also be determined and applied regardless of the value of the SS/PBCH block and the CORESET multiplexing pattern.

Note that the value of the SS/PBCH block and the CORESET multiplexing pattern may be identified in association with, for example, a value indicated as controlResourceSetZero, searchSpaceZero, or pdcch-ConfigSIB 1, which are upper layer parameters included in a Master Information Block (MIB) transmitted by PBCH. In addition, the above-described PDSCH may transmit, for example, ReMaining System Information (RMSI) or System Information Block Type 1 (SIB1).

[Identification and Indication of Mapping Method of Additional SSB]

In the process of S101 in each of the above-described operations, a method for terminal 200 to identify information (e.g., information on the sequence and the method for mapping resources) on legacy SSB and additional SSB is not limited to be based on pre-defined or pre-configured information.

For example, the method for terminal 200 to identify legacy SSB and additional SSB may be a method based on an explicit or implicit indication (or configuration) from base station 100. Note that the indication may be indicated to terminal 200 by at least one of a DCI and a higher layer signaling, for example.

Further, the information on the resource (e.g., at least one of a temporal resource and a frequency resource) in which additional SSB is mapped may be, for example, information indicating an absolute position or information indicating a relative position (e.g., offset) from legacy SSB. For example, the temporal offset may be represented by a unit of a time resource such as a frame, subframe, a slot, or a symbol. Further, the frequency offset may be represented by a unit of a frequency resource such as a resource block or a subcarrier, for example.

Furthermore, for example, when legacy SSB burst set is mapped in one of the first half of a frame (e.g., first half frame) and the second half of the frame (e.g., second half frame), additional SSB burst set may be mapped in the other half frame. At this time, the resource mapping of SSB in the half frame may be common (e.g., identical) between legacy SSB and additional SSB.

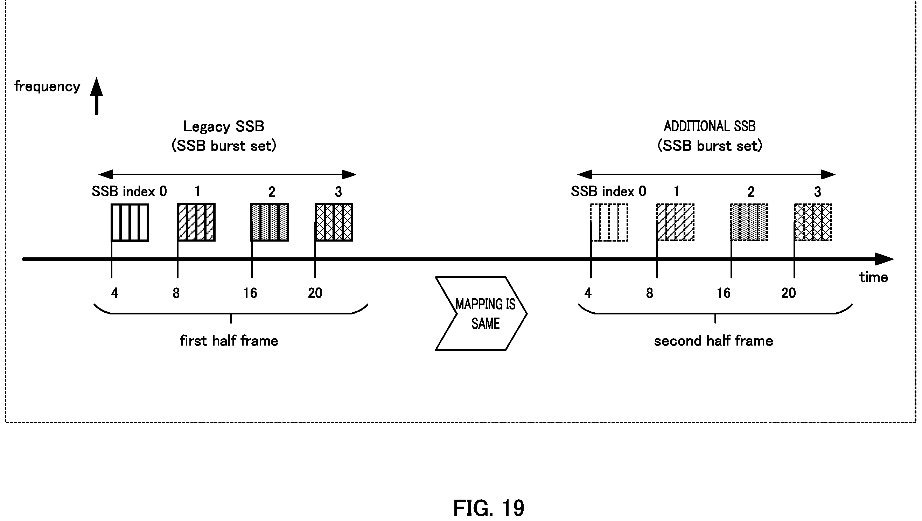

FIG. 19 illustrates exemplary mapping of legacy SSB and additional SSB. In FIG. 19, for example, the legacy SSB is mapped in the first half frame, and the additional SSB is mapped in the second half frame. Further, for example, as illustrated in FIG. 19, when the legacy SSB is mapped to the fourth, eighth, sixteenth, and twentieth symbols of one half frame, terminal 200 may determine that the additional SSB is mapped to the fourth, eighth, sixteenth, and twentieth symbols of the other half frame.

This method allows terminal 200 to, for example, identify the mapping of additional SSB based on the information on the mapping of legacy SSB, which can reduce the indication on additional SSB.

[Relation with SSB Burst Set]

The number of SSBs (or SSB candidates) transmitted in legacy SSB burst set and the number of SSBs transmitted in additional SSB burst set may be the same as or different from each other.

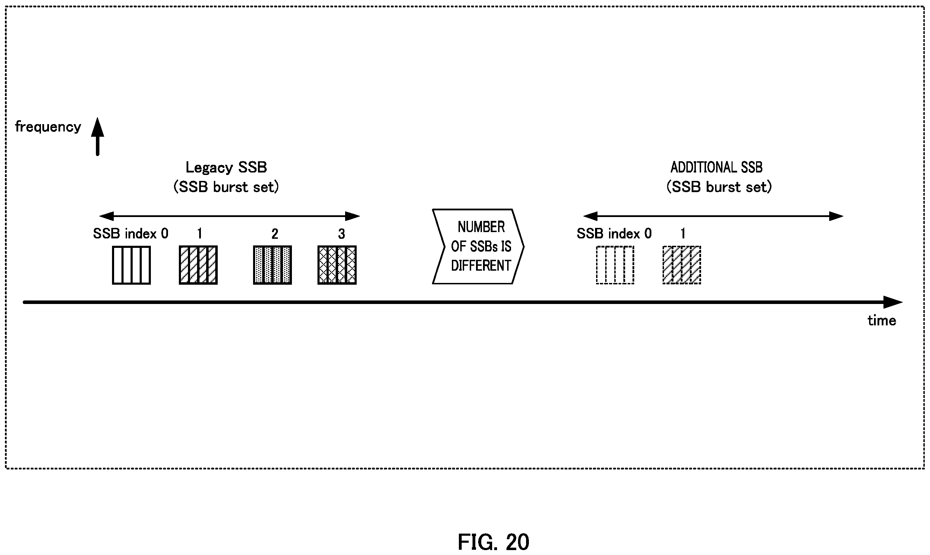

FIG. 20 illustrates exemplary legacy SSB burst set and additional SSB burst set. In FIG. 20, for example, the number of SSBs in the legacy SSB burst set is four, and the number of SSBs in the additional SSB burst set is two. In the example illustrated in FIG. 20, the resource overhead of the additional SSB can be reduced. Further, the process relating to the additional SSB can be reduced, and thus power consumption in base station 100 and terminal 200 can be reduced.

Note that the numbers of SSBs in legacy SSB burst set and additional SSB burst set are not limited to the example illustrated in FIG. 20, and may be another number.

In addition, the number of SSB burst sets transmitted as additional SSB may be the same as or different from the number of legacy SSB burst sets. For example, the number of SSB burst sets transmitted as additional SSB may be an integral multiple of the number of legacy SSB burst sets.

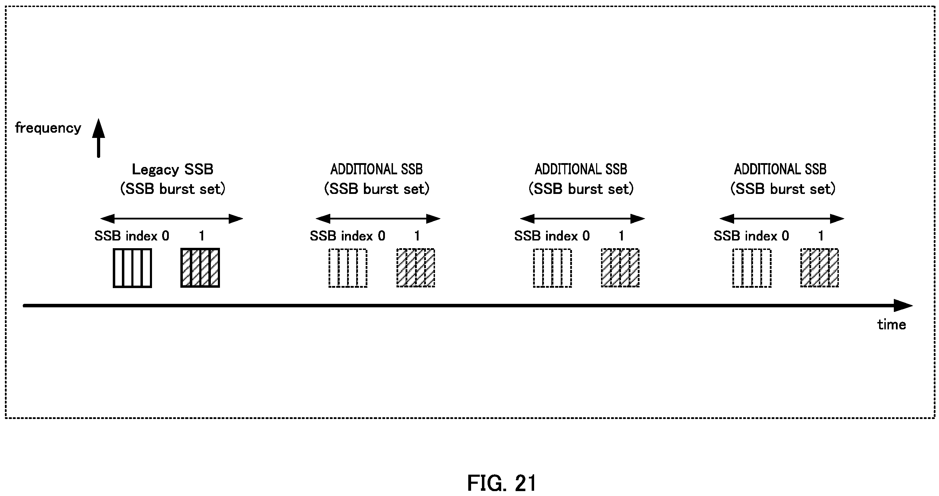

FIG. 21 illustrates exemplary legacy SSB burst set and additional SSB burst set. In FIG. 21, the number of SSB burst sets (e.g., three sets) transmitted as additional SSB is configured as three times the number of legacy SSB burst sets (e.g., one set), for example. The number of SSB burst sets to be configured as additional SSB is not limited to the example illustrated in FIG. 21, and may be another number.

For example, the more the number of SSBs transmitted as additional SSB increases, the larger the reception coverage of SSBs can be.

Further, when a plurality of additional SSB burst sets are transmitted, the number of SSBs in each additional SSB burst set may be different from each other. For example, the number of SSBs in one additional SSB burst set may be less than the number of SSBs in another additional SSB burst set. This can reduce the resource overhead of additional SSB.

In addition, when a plurality of additional SSB burst sets are transmitted, at least one of the sequence and the signal mapping configured in each additional SSB burst set may be common, for example. This can suppress the complication of the decoding process of additional SSB in terminal 200.

Note that, when a plurality of additional SSB burst sets are transmitted, at least one of the sequence and the signal mapping configured in each additional SSB burst set may be different from each other.

[Unlicensed Band]

Each exemplary operation described above may be applied, for example, to communication using an unlicensed band (e.g., also referred to as an unlicensed spectrum or a shared spectrum).

At this time, among candidates of SSBs (e.g., SSB candidates), legacy SSB may be transmitted in $N_{SSB}^{QCL}$ SSB candidate transmitted after the completion of the carrier sense (or referred to as Listen Before Talk (LBT) or Channel Clear Assessment (CCA)), and additional SSB may be transmitted in the SSB candidate subsequent to the $N_{SSB}^{QCL}$ SSB candidate. Note that $N_{SSB}^{QCL}$ is a value indicated to terminal 200 by an upper layer or a DCI.

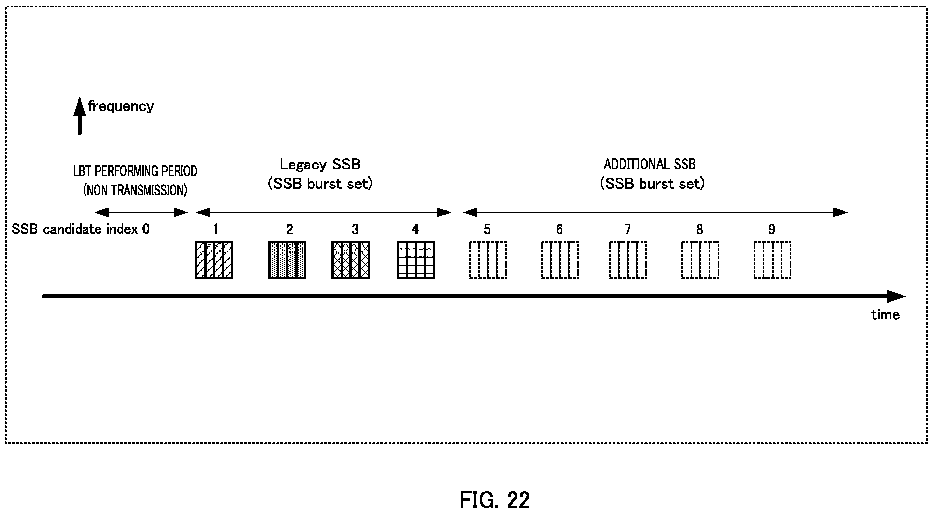

As an example, FIG. 22 illustrates an exemplary configuration of SSB in the case where $N_{SSB}^{QCL} = 4$ and the number of SSB candidates is ten (e.g., SSB candidate indexes 0 to 9). In FIG. 22, the legacy SSB is transmitted in four SSB candidates of SSB candidate indexes = 1 to 4 after the completion of LBT, and the additional SSB is transmitted in five SSB candidates of other SSB candidate indexes = 5 to 9.

The exemplary operations of base station 100 and terminal 200 have been described above.

Note that parameters such as the sequence length and type of PSS, SSS and DMRS for PBCH, the signal mapping in SSB, and the configuration of each SSB burst set (e.g., the number of SSBs in a burst set or the number of burst sets) are not limited to those described above.

As described above, in the present embodiment, terminal 200 receives, for example, legacy SSB and additional SSB of which at least one of the sequence and the signal mapping is different from that of the legacy SSB, and performs cell search based on the legacy SSB and the additional SSB.

This allows terminal 200 to which CE or RedCap is applied to expand the receivable coverage of SSB, for example. Thus, according to the present embodiment, the received quality of SSB in terminal 200 can be enhanced. Further, in a Rel-15/16 terminal or another terminal in Rel 17 NR or later release, which does not support CE or RedCap, erroneous detection of additional SSB can be reduced and synchronization failures can be suppressed.

The embodiment of the present disclosure have been described above.

[Other Embodiments]

(Sequence of Additional SSB)

For example, in additional SSB, the sequence different from the sequence of legacy SSB may be applied to PSS, and the same sequence as legacy SSB may be applied to another signal (e.g., SSS and DMRS for PBCH). Thus, terminal 200 may attempt to perform detection assuming both legacy SSB and additional SSB when detecting (searching) PSS, and may attempt to perform detection assuming legacy SSB when detecting another signal (e.g., SSS and DMRS for PBCH). This can reduce the processing load in terminal 200.

Further, in additional SSB, the sequence different from the sequence of legacy SSB may be applied to PSS and SSS, and the same sequence as legacy SSB may be applied to another signal (e.g., DMRS for PBCH). Thus, terminal 200 may attempt to perform detection assuming both legacy SSB and additional SSB when detecting (searching) PSS and SSS, and attempt to perform detection assuming legacy SSB when detecting another signal (e.g., DMRS for PBCH). This can reduce the processing load in terminal 200.

In addition, the sequence different from the sequence of legacy SSB may be applied to PSS, SSS, and DMRS for PBCH. This can reduce the possibility that another terminal (e.g., a Rel-15/16 terminal or a terminal in Rel 17 NR or later release, which does not support CE or RedCap) erroneously detects additional SSB.

Note that, the sequence different from that of legacy SSB may be applied to any one of or a combination of a plurality of PSS, SSS, and DMRS for PBCH included in additional SSB.

(Transmission Power)

In the above-described embodiment, additional SSB may be transmitted at a high power compared to legacy SSB, for example. This can expand the coverage over which additional SSB can be received.

(Information Carried by PBCH)

In the above-described embodiment, the information carried by PBCH of additional SSB may be in common (identical to) with the information carried by PBCH of legacy SSB. This allows terminal 200 to synthetically receive PBCH of legacy SSB and PBCH of additional SSB, which can enhance reception accuracy.

Alternatively, the information carried by PBCH of additional SSB may be different from the information carried by PBCH of legacy SSB. For example, terminal 200 may be explicitly or implicitly indicated that SSB corresponding to PBCH is "additional SSB" by PBCH of additional SSB. This can reduce the possibility that another terminal different from terminal 200 erroneously detects additional SSB.

(Reception Processing by Terminal 200)

Terminal 200 may, for example, receive and decode legacy SSB and additional SSB separately from each other. In other words, terminal 200 may, for example, receive and decode legacy SSB and additional SSB without performing in-phase combining of SSBs (e.g., soft-combining). Thus, for example, terminal 200 can receive each SSB even when the sequence or the signal configuration (e.g., signal mapping) is different between the legacy SSB and the additional SSB.

Further, terminal 200 may perform receiving and decoding processing based on the combination of legacy SSB and additional SSB. For example, terminal 200 may receive legacy SSB and additional SSB by performing in-phase combining (soft-combining) of legacy SSB and additional SSB, and may detect one sequence into which the sequence of legacy SSB and the sequence of additional SSB are combined. This can enhance the accuracy of receiving SSBs by terminal 200. Furthermore, regarding the in-phase combining, terminal 200 may combine SSBs whose SSB indexes are the same with each other.

In addition, terminal 200 may receive additional SSB, and may not receive legacy SSB, for example. This can reduce the power consumption in the reception process in terminal 200.

(Radio Resource Management (RRM) and Radio Link Monitoring (RLM) measurement)

For example, terminal 200 and another terminal different from terminal 200 may perform an RRM measurement and an RLM measurement using legacy SSB or additional SSB. At this time, the information on additional SSB transmitted in the current cell or the cell in the vicinity of the current cell may be indicated to terminal 200. This enables the RRM or RLM measurement of additional SSB and enhances the measurement accuracy.

(Type and Identification of Terminal)

Terminal 200 may be, for example, a "RedCap terminal" or a "CE terminal". Further, terminal 200 may be, for example, a terminal having at least one of the following characteristics (in other words, property, attribute, or capability).

(1) A terminal indicating (e.g., report) base station 100 that the terminal is a "terminal that is a subject of coverage expansion", a "terminal that receives a signal repeatedly transmitted", a "RedCap terminal", or a "CE terminal".
(2) A terminal having at least one of the following capabilities, or a terminal reporting at least one of the following capabilities to base station 100.

■ A terminal in which the number of implemented reception antennae is equal to or less than a threshold value (e.g., threshold = 1)

■ A terminal in which the number of supportable reception antenna ports is equal to or less than a threshold value (e.g., threshold = 2)

■ A terminal in which the number of supportable maximum Multiple-Input Multiple-Output (MIMO) layers (or the number of ranks) is equal to or less than a threshold value (e.g., threshold = 2)

■ A terminal that can receive SSB in a frequency band (e.g., Frequency Range 2 (FR2)) equal to or higher than a threshold value

■ A terminal whose processing time is equal to or longer than a threshold value

■ A terminal in which the available transport block size (TBS) is equal to or less than a threshold value

■ A terminal in which the number of available MIMO transmission layers is equal to or less than a threshold value

■ A terminal whose available modulation order is equal to or less than a threshold value

■ A terminal in which the number of available Hybrid Automatic Repeat request (HARQ) processes is equal to or less than a threshold value

■ A terminal that supports Rel-17 NR or later release

(RRC state)

In the above-described embodiments, the mode (e.g., the state of terminal 200) set in terminal 200 may be an RRC_IDLE mode, an RRC_INACTIVE mode, or an RRC_CONNECTED mode. In other words, the mode may be before or after RRC configuration in terminal 200.

(Numerology)

The bandwidth of SSB may vary depending on the configured numerology or subcarrier spacing.

(Control Signal)

In the above embodiments, the control signal may be a PDCCH transmitting a DCI of the physical layer, or may be MAC of the higher layer or RRC.

(Base Station)

In the above embodiments, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in side link communication, a terminal may be adopted instead of a base station.

(Uplink/Downlink)

The above embodiments have been described with synchronization signal or PBCH, which is a downlink signal, an example, but the present disclosure is not limited thereto and may be applied to an uplink signal, for example, PUSCH or PRACH.

(Data Channel/Control Channel)

The above embodiments have been described with the PBCH used for cell search as an example, but the present disclosure is not limited thereto and may be applied to the PDCCH used for transmission of control information.

(Reference Signals)

In the above embodiments, the reference signals are signals known to both a base station and a terminal and each reference signal may be referred to as a reference signal (RS) or a pilot signal. The reference signal may be any of a DMRS, a channel state information - reference signal (CSI-RS), a tracking reference signal (TRS), a phase tracking reference signal (PTRS), and a cell-specific reference signal (CRS).

(Time Intervals)

In the present disclosure, time resource units are not limited to one or a combination of slots and symbols, and may be time resource units, such as frames, superframes, subframes, slots, time slot subslots, minislots, or time resource units, such as symbols, orthogonal frequency division multiplexing (OFDM) symbols, single carrier-frequency division multiplexing access (SC-FDMA) symbols, or other time resource units. The number of symbols included in one slot is not limited to any number of symbols exemplified in the embodiments described above, and may be other numbers of symbols.

(Application to Sidelink)

The above embodiments may be applied to the communication using the sidelink for vehicle to everything (V2X) or communication between terminals. In this case, the PDCCH may be replaced by a physical sidelink control channel (PSCCH), the PUSCH/PDSCH may be replaced by a physical sidelink shared channel (PSSCH), and the PUCCH may be replaced by a physical sidelink feedback channel (PSFCH).

<5G NR System Architecture and Protocol Stacks>

3GPP has been working at the next release for the 5th generation cellular technology, simply called 5G, including the development of a new radio (NR) access technology operating in frequencies ranging up to 100 GHz. The first version of 5G standard was initially delivered in late 2017, which allows proceeding to trials and commercial deployments of 5G NR standard-compliant terminals, e.g., smartphones.

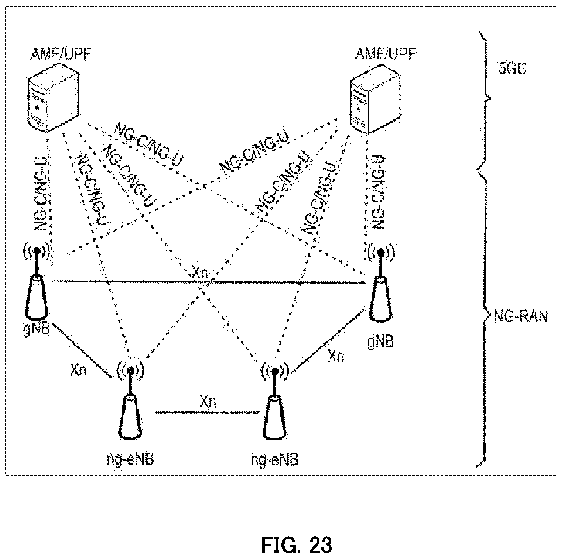

For example, the overall system architecture assumes a Next Generation-Radio Access Network (NG-RAN) that includes gNBs. The gNBs provide the NG-radio access user plane (SDAP/PDCP/RLC/MAC/PHY) and control plane (RRC) protocol terminations towards a UE. The gNBs are interconnected with each other via an Xn interface. The gNBs are also connected to the Next Generation Core (NGC) via the Next Generation (NG) interface, more specifically to the Access and Mobility Management Function (AMF; e.g. a particular core entity performing the AMF) via the NG-C interface, and to the User Plane Function (UPF; e.g. a particular core entity performing the UPF) via the NG-U interface. The NG-RAN architecture is illustrated in FIG. 23 (see, for example, 3GPP TS 38.300 v15.6.0, section 4).

The user plane protocol stack for NR (see, for example, 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new access stratum (AS) sublayer (Service Data Adaptation Protocol: SDAP) is introduced above the PDCP (see, for example, clause 6.5 of 3GPP TS 38.300). A control plane protocol stack is also defined for NR (see, for example, TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For example, the Medium-Access-Control layer handles logical-channel multiplexing, and scheduling and scheduling-related functions, including handling of different numerologies.

The physical layer (PHY) is, for example, responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), massive machine type communication (mMTC), which have diverse requirements in terms of data rates, latency, and coverage. For example, the eMBB is expected to support peak data rates (20 Gbps for downlink and 10 Gbps for uplink) and user-experienced data rates in the order of three times what is offered by IMT-Advanced. Meanwhile, in a case of the URLLC, the tighter requirements are put on ultra-low latency (0.5 ms for each of LTL and DL for user plane latency) and high reliability (1-10-5 within 1 ms). Finally, the mMTC may preferably require high connection density (1,000,000 devices/km2 in an urban environment), large coverage in harsh environments, and extremely long-life battery for low cost devices (15 years).

Thus, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (also referred to as TTI) than an mMTC service. Furthermore, deployment scenarios with large channel delay spreads may preferably require a longer CP duration than scenarios with short delay spreads. The subcarrier spacing may be optimized accordingly to retain the similar CP overhead. NR may support more than one value of subcarrier spacing. Correspondingly, subcarrier spacing of 15 kHz, 30 kHz, 60 kHz ... are currently considered. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR, for each numerology and carrier, a resource grid of subcarriers and OFDM symbols is defined for each of uplink and downlink. Each element in the resource grid is called a resource element and is identified based on the frequency index in the frequency domain and the symbol position in the time domain (see 3GPP TS 38.211 v15.6.0).

<5G NR Functional Split between NG-RAN and 5GC>

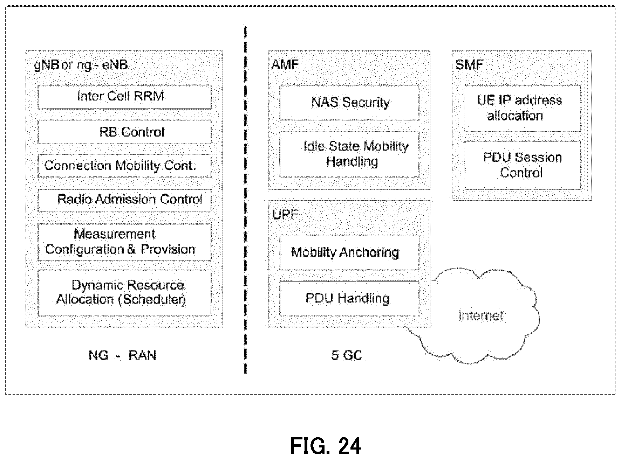

FIG. 24 illustrates functional split between NG-RAN and 5GC. An NG-RAN logical node is a gNB or ng-eNB. The 5GC has logical nodes AMF, UPF, and SMF.

For example, the gNB and ng-eNB host the following main functions:

■ Functions for radio resource management such as radio bearer control, radio admission control, connection mobility control, dynamic allocation of resources to LTEs in both uplink and downlink (scheduling);
■ IP header compression, encryption, and integrity protection of data;
■ Selection of an AMF at UE attachment when no routing to an AMF can be determined from the information provided by the UE;
■ Routing of user plane data towards UPF(s);
■ Routing of control plane information towards AMF;
■ Connection setup and release;
■ Scheduling and transmission of paging messages;
■ Scheduling and transmission of system broadcast information (originated from the AMF or Operation, Admission, Maintenance (OAM));
■ Measurement and measurement reporting configuration for mobility and scheduling;
■ Transport level packet marking in the uplink;
■ Session management;
■ Support of network slicing;
■ QoS Flow management and mapping to data radio bearers;
■ Support of UEs in RRC_INACTIVE state;
■ Distribution function for NAS messages;
■ Radio access network sharing;
■ Dual Connectivity; and
■ Tight interworking between NR and E-UTRA.

The access and mobility management function (AMF) hosts the following main functions:

■ Non-Access Stratum (NAS) signaling termination function;
■ NAS signaling security;
■ Access Stratum (AS) security control;
■ Inter Core Network (CN) node signaling for mobility between 3GPP access networks;
■ Idle mode LTE reachability (including control and execution of paging retransmission);
■ Registration area management;
■ Support of intra-system and inter-system mobility;
■ Access authentication;
■ Access authorization including check of roaming rights;
■ Mobility management control (subscription and policies);
■ Support of network slicing; and
■ Session Management Function (SMF) selection.

Furthermore, the user plane function (UPF) hosts the following main functions:

■ Anchor point for intra-/inter-RAT mobility (when applicable);
■ External protocol data unit (PDU) session point of interconnect to a data network;
■ Packet routing and forwarding;
■ Packet inspection and user plane part of policy rule enforcement;

- Traffic usage reporting;
- Uplink classifier to support routing traffic flows to a data network;
- Branching point to support multi-homed PDU session;
- QoS handling for user plane (e.g. packet filtering, gating, and UL/DL rate enforcement);
- Uplink traffic verification (SDF to QoS flow mapping); and
- Downlink packet buffering and downlink data indication triggering.

Finally, the session management function (SMF) hosts the following main functions:

- Session management;
- UE IP address allocation and management;
- Selection and control of UPF;
- Configuration function of traffic steering at a user plane function (UPF) to route traffic to proper destination;
- Control part of policy enforcement and QoS; and
- Downlink data indication.

<RRC Connection Setup and Reconfiguration Procedures>

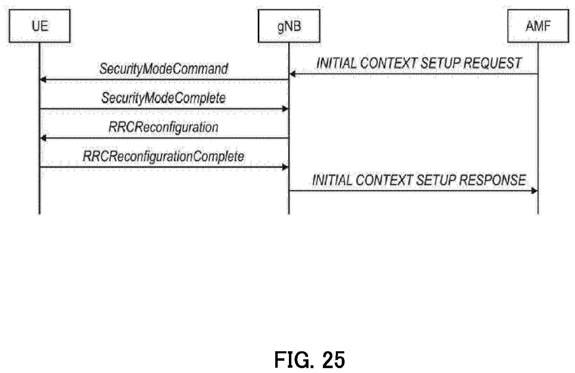

FIG. 25 illustrates some interactions between a UE, gNB, and AMF (an 5GC entity) in the context of a transition of the UE from RRC_IDLE to RRC_CONNECTED for the NAS part (see TS 38.300 v15.6.0).

RRC is a higher layer signaling (protocol) used for LTE and gNB configuration. This transition involves that the AMF prepares the UE context data (including, for example, PDU session context, security key, UE radio capability, and UE security capabilities, etc.) and transmits the UE context data to the gNB with an INITIAL CONTEXT SETUP REQUEST. Then, the gNB activates the AS security with the UE, which is performed by the gNB transmitting a SecurityModeCommand message to the UE and by the UE responding to the gNB with a SecurityModeComplete message. Afterwards, the gNB performs the reconfiguration to set up the Signaling Radio Bearer 2 (SRB2) and Data Radio Bearer(s) (DRB(s)) by transmitting an RRCReconfiguration message to the UE and, in response, receiving an RRCReconfigurationComplete from the LTE. For a signaling-only connection, the steps relating to the RRCReconfiguration are skipped since the SRB2 and DRBs are not setup. Finally, the gNB indicates to the AMF that the setup procedure is completed with an INITIAL CONTEXT SETUP RESPONSE.

In the present disclosure, thus, an entity (e.g., AMF, SMF, etc.) of the 5th Generation Core (5GC) is provided that includes control circuitry, which, in operation, establishes a Next Generation (NG) connection with a gNodeB, and a transmitter, which in operation, transmits an initial context setup message, via the NG connection, to the gNodeB to cause a signaling radio bearer setup between the gNodeB and user equipment (LTE). In particular, the gNodeB transmits a radio resource control (RRC) signaling containing a resource allocation configuration information element (IE) to the UE via the signaling radio bearer. The LTE then performs an uplink transmission or a downlink reception based on the resource allocation configuration.

<Usage Scenarios of IMT for 2020 and beyond>

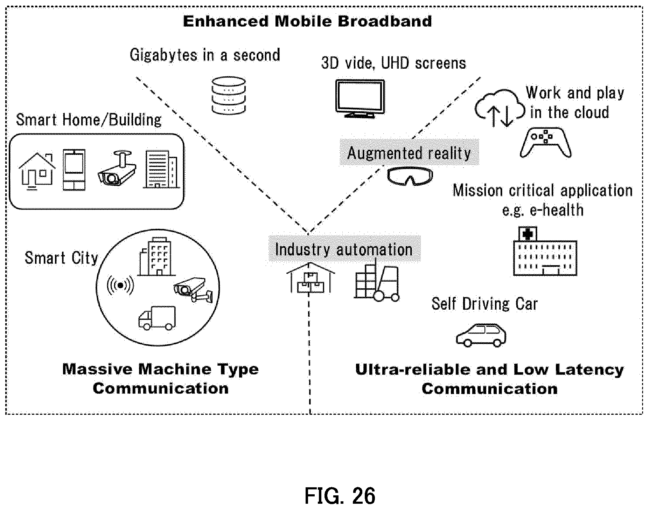

FIG. 26 illustrates some of the use cases for 5G NR. In the 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 26 illustrates some examples of envisioned usage scenarios for IMT for 2020 and beyond (see, e.g., ITU-R M. 2083 FIG. 2).

The URLLC use case has stringent requirements for capabilities such as throughput, latency, and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by identifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of the mMTC (massive machine type communication) is characterized by a very large number of connected devices typically transmitting a relatively low volume of non-delay sensitive data. Devices are required to be low cost and to have a very long battery life. From the NR perspective, utilizing very narrow bandwidth parts is one possible solution to have power saving from the UE perspective and enable the long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10-6 level), higher availability, packet size of up to 256 bytes, time synchronization down to the order of a few μs where the value can be one or a few μs depending on frequency range and short latency in the order of 0.5 to 1 ms (e.g., target user plane latency of 0.5 ms) depending on the use cases.

Moreover, for NR URLLC, several technology enhancements from the physical layer perspective have been identified. These technology enhancements include Physical Downlink Control Channel (PDCCH) enhancements related to compact DCI, PDCCH repetition, and increased PDCCH monitoring. In addition, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements have been identified. The term "mini-slot" refers to a transmission time interval (TTI) including a smaller number of symbols than a slot (a slot includes fourteen symbols).

<QoS Control>

The 5G Quality of Service (QoS) model is based on QoS flows and supports both QoS flows that require guaranteed flow bit rate (GBR QoS flows) and QoS flows that do not require guaranteed flow bit rate (non-GBR QoS Flows). At the NAS level, the QoS flow is thus the finest granularity of QoS differentiation in a PDU session. A QoS flow is identified within a PDU session by a QoS flow ID (QFI) carried in an encapsulation header over the NG-U interface.

For each UE, the 5GC establishes one or more PDU sessions. For each UE, the NG-RAN establishes at least one Data Radio Bearer (DRB) together with the PDU session, for example as illustrated above with reference to FIG. 25. Additional DRB(s) for QoS flow(s) of that PDU session can be subsequently configured (it is up to NG-RAN when to do so). The NG-RAN maps packets belonging to different PDU sessions to different DRBs. NAS level packet filters in the UE and 5GC associate LTL and DL packets with QoS flows, whereas AS-level mapping rules in the LTE and in the NG-RAN associate LTL and DL QoS flows with DRBs.

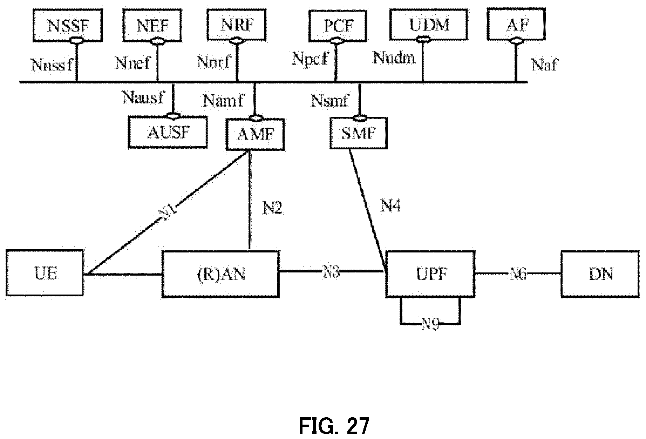

FIG. 27 illustrates a 5G NR non-roaming reference architecture (see TS 23.501 v16.1.0, section 4.23). An Application Function (AF, e.g., an external application server hosting 5G services exemplified in FIG. 26) interacts with the 3GPP core network in order to provide services, for example, to support application influence on traffic routing, accessing a Network Exposure Function (NEF) or interacting with the policy framework for policy control (see Policy Control Function, PCF), e.g. QoS control. Based on operator deployment, application functions considered to be trusted by the operator can be allowed to interact directly with relevant network functions. Application functions not allowed by the operator to access directly the network functions use the external exposure framework via the NEF to interact with relevant network functions.

FIG. 27 illustrates further functional units of the 5G architecture, namely a Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (for example, AF of the 5G architecture), is provided that includes a transmitter, which in operation, transmits a request containing a QoS requirement for at least one of the URLLC, eMMB, and mMTC services to at least one of functions (for example NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. The technique of implementing an integrated circuit is not limited to the LSI, however, and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas. Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to an embodiment of the present disclosure includes: reception circuitry, which, in operation, receives a first synchronization signal block and a second synchronization signal block of which at least one of a sequence and a signal mapping is different from that of the first synchronization signal block; and control circuitry, which, in operation, performs cell search based on the first synchronization signal block and the second synchronization signal block.

In the embodiment of the present disclosure, the sequence of at least one signal of a first synchronization signal, a second synchronization signal, and a reference signal mapped in each synchronization signal block is different between the first synchronization signal block and the second synchronization signal block.

In the embodiment of the present disclosure, the sequence of one of the first synchronization signal block and the second synchronization signal block is a sequence obtained by rearranging an element of the sequence of the other one of the first synchronization signal block and the second synchronization signal block.

In the embodiment of the present disclosure, the sequence of the one of the first and the second synchronization signal blocks is a sequence obtained by inverting an order of the element of the other one thereof.

In the embodiment of the present disclosure, the sequence of one of the first and the second synchronization signal blocks is a sequence obtained by performing cyclic-shift on the element of the sequence of the other one thereof.

In the embodiment of the present disclosure, the sequence of one of the first and the second synchronization signal blocks is a sequence obtained by interleaving the element of the sequence of the other one thereof.

In the embodiment of the present disclosure, a signal mapping order of a first synchronization signal, a second synchronization signal, and a broadcast signal is different between the first synchronization signal block and the second synchronization signal block.

In the embodiment of the present disclosure, a signal mapping order of the first synchronization signal and the second synchronization signal is opposite between the first synchronization signal block and the second synchronization signal block.

In the embodiment of the present disclosure, the signal mapping order of the first synchronization signal, the second synchronization signal, and the broadcast signal is opposite between the first synchronization signal block and the second synchronization signal block.

In the embodiment of the present disclosure, the first synchronization signal block includes a first synchronization signal, a second synchronization signal, and a broadcast signal, and the second synchronization signal block includes one or some of a first synchronization signal, a second synchronization signal, and a broadcast signal.

In the embodiment of the present disclosure, the second synchronization signal block includes a broadcast signal and include neither a first synchronization signal nor a second synchronization signal.

In the embodiment of the present disclosure, the second synchronization signal block includes a first synchronization signal and includes neither a second synchronization signal nor a broadcast signal.

In the embodiment of the present disclosure, a mapping position of the first synchronization signal in the second synchronization signal block is a time resource within a threshold symbol from a time resource in which the first synchronization signal is mapped in the first synchronization signal block.

In the embodiment of the present disclosure, a mapping position of a first synchronization signal in the second synchronization signal block is a time resource in common with that of the first synchronization signal in the first synchronization signal block and a frequency resource different from that of the first synchronization signal in the first synchronization signal block.

In the embodiment of the present disclosure, no transmission of a signal different from a first synchronization signal is configured in a frequency resource within a threshold subcarrier from a frequency resource in which the first synchronization signal of the second synchronization signal block is mapped.

A base station according to the embodiment of the present disclosure includes: control circuitry, which, in operation, generates a first synchronization signal block and a second synchronization signal block of which at least one of a sequence and a signal mapping is different from that of the first synchronization signal block, and transmission circuitry, which, in operation, transmits the first synchronization signal block and the second synchronization signal block.

In a communication method according to the embodiment of the present disclosure, the terminal receives a first synchronization signal block and a second synchronization signal block of which at least one of a sequence and a signal mapping is different from that of the first synchronization signal block; and performs cell search based on the first synchronization signal block and the second synchronization signal block.

In a communication method according to the embodiment of the present disclosure, the base station generats a first synchronization signal block and a second synchronization signal block of which at least one of a sequence and a signal mapping is different from that of the first synchronization signal block; and transmits the first synchronization signal block and the second synchronization signal block.

The disclosure of Japanese Patent Application No. 2020-133006, filed on August 5, 2020, including the specification, drawings and abstract, is incorporated herein by reference in its entirety.

Industrial Applicability

An exemplary embodiment of the present disclosure is useful for radio communication systems.

Reference Signs List

    100 Base station
    101, 208 Controller
    102 Signal generator
    103, 209 Encoder/Modulator
    104 Signal mapper
    105, 210 Transmitter
    106, 201 Antenna
    107, 202 Receiver
    108, 206 Demodulator/decoder
    200 Terminal

203 Signal separator
204 Signal detector
205 Channel estimator
207 Broadcast information receiver

**Claims**

1. A terminal comprising:

   reception circuitry, which, in operation, receives a first synchronization signal block and a second synchronization signal block of which at least one of a sequence and a signal mapping is different from that of the first synchronization signal block; and
   control circuitry, which, in operation, performs cell search based on the first synchronization signal block and the second synchronization signal block.

2. The terminal according to claim 1, wherein
   the sequence of at least one signal of a first synchronization signal, a second synchronization signal, and a reference signal mapped in each synchronization signal block is different between the first synchronization signal block and the second synchronization signal block.

3. The terminal according to claim 2, wherein
   the sequence of one of the first synchronization signal block and the second synchronization signal block is a sequence obtained by rearranging an element of the sequence of the other one of the first synchronization signal block and the second synchronization signal block.

4. The terminal according to claim 3, wherein
   the sequence of the one of the first and the second synchronization signal blocks is a sequence obtained by inverting an order of the element of the other one thereof.

5. The terminal according to claim 3, wherein
   the sequence of one of the first and the second synchronization signal blocks is a sequence obtained by performing cyclic-shift on the element of the sequence of the other one thereof.

6. The terminal according to claim 3, wherein
   the sequence of one of the first and the second synchronization signal blocks is a sequence obtained by interleaving the element of the sequence of the other one thereof.

7. The terminal according to claim 1, wherein
   a signal mapping order of a first synchronization signal, a second synchronization signal, and a broadcast signal is different between the first synchronization signal block and the second synchronization signal block.

8. The terminal according to claim 7, wherein
   a signal mapping order of the first synchronization signal and the second synchronization signal is opposite between the first synchronization signal block and the second synchronization signal block.

9. The terminal according to claim 7, wherein
   the signal mapping order of the first synchronization signal, the second synchronization signal, and the broadcast signal is opposite between the first synchronization signal block and the second synchronization signal block.

10. The terminal according to claim 1, wherein

    the first synchronization signal block includes a first synchronization signal, a second synchronization signal, and a broadcast signal, and
    the second synchronization signal block includes one or some of a first synchronization signal, a second synchronization signal, and a broadcast signal.

11. The terminal according to claim 10, wherein

the second synchronization signal block includes a broadcast signal and include neither a first synchronization signal nor a second synchronization signal.

12. The terminal according to claim 10, wherein
the second synchronization signal block includes a first synchronization signal and includes neither a second synchronization signal nor a broadcast signal.

13. A base station comprising:

control circuitry, which, in operation, generates a first synchronization signal block and a second synchronization signal block of which at least one of a sequence and a signal mapping is different from that of the first synchronization signal block, and
transmission circuitry, which, in operation, transmits the first synchronization signal block and the second synchronization signal block.

14. A communication method comprising:

receiving, by a terminal, a first synchronization signal block and a second synchronization signal block of which at least one of a sequence and a signal mapping is different from that of the first synchronization signal block; and
performing, by the terminal, cell search based on the first synchronization signal block and the second synchronization signal block.

15. A communication method comprising:

generating, by a base station, a first synchronization signal block and a second synchronization signal block of which at least one of a sequence and a signal mapping is different from that of the first synchronization signal block; and
transmitting, by the base station, the first synchronization signal block and the second synchronization signal block.

FIG. 1

FIG. 2

Beam for SSB index 1

Beam for SSB index 2

UEs detecting
SSB index i=1

UEs detecting
SSB index i=2

FIG. 3

EP 4 195 830 A1

FIG. 4

EP 4 195 830 A1

100

101                                        105

| CONTROLLER | → | TRANSMITTER |

FIG. 5

200

202                                        208

| RECEIVER | → | CONROLLER |

FIG. 6

FIG. 7

EP 4 195 830 A1

FIG. 8

EP 4 195 830 A1

```
        ┌──────────────┐                          ┌──────────────┐
        │ BASE STATION │                          │ TERMINAL 200 │
        │     100      │                          └──────────────┘
        └──────────────┘                                 │        S101
               │                                  ┌───────────────────────────┐
               │                                  │ DETERMINE SEQUENCE AND TIME/│
               │                                  │ FREQUENCY RESOURCE OF SSB   │
               │                S102              └───────────────────────────┘
               │─────────────────────────────────────────►       S103
               │  SSB                             ┌───────────────────────────┐
               │                                  │       DETECT PSS           │
               │                                  └───────────────────────────┘
               │                                          │        S104
               │                                  ┌───────────────────────────┐
               │                                  │ DETECT SSS AND CALCULATE PCI│
               │                                  └───────────────────────────┘
               │                                          │        S105
               │                                  ┌───────────────────────────┐
               │                                  │ DETECT DMRS FOR PBCH AND    │
               │                                  │   ESTIMATE CHANNEL          │
               │                                  └───────────────────────────┘
               │                                          │        S106
               │                                  ┌───────────────────────────┐
               │                                  │       DECODE PBCH          │
               │                                  └───────────────────────────┘
               │                S107                      │
               │◄─────────────────────────────────────────
               │  PRACH PREAMBLE
               │                                          │
```

FIG. 9

frequency

Legacy SSB
(SSB burst set)

SSB index 0    1      2      3

DIFFERENT
SEQUENCE

ADDITIONAL SSB
(SSB burst set)

SSB index 0    1      2      3

time

FIG. 10

FIG. 11

FIG. 12

FIG. 13

frequency

ADDITIONAL SSB
(SSB burst set)

SSB index 0          1

PSS          PSS

DIFFERENT MAPPING

Legacy SSB
(SSB burst set)

SSB index 0          1

PBCH
SSS
PBCH
PSS

PBCH
SSS
PBCH
PSS

time

FIG. 14

FIG. 15

EP 4 195 830 A1

FIG. 16

FIG. 17

FIG. 18

frequency

Legacy SSB
(SSB burst set)

ADDITIONAL SSB
(SSB burst set)

SSB index 0   1     2     3

SSB index 0   1     2     3

time

4    8    16    20

MAPPING IS
SAME

4    8    16    20

first half frame

second half frame

FIG. 19

FIG. 20

EP 4 195 830 A1

FIG. 21

FIG. 22

EP 4 195 830 A1

FIG. 23

| gNB or ng - eNB | AMF | SMF |
|---|---|---|
| Inter Cell RRM | NAS Security | UE IP address allocation |
| RB Control | Idle State Mobility Handling | PDU Session Control |
| Connection Mobility Cont. | | |
| Radio Admission Control | UPF | |
| Measurement Configuration & Provision | Mobility Anchoring | |
| Dynamic Resource Allocation (Scheduler) | PDU Handling | internet |

NG - RAN                    5 GC

FIG. 24

FIG. 25

EP 4 195 830 A1

FIG. 26

**FIG. 27**

## INTERNATIONAL SEARCH REPORT

| International application No. |
| --- |
| PCT/JP2021/019715 |

**A. CLASSIFICATION OF SUBJECT MATTER**

Int. Cl. H04W72/04(2009.01)i, H04W48/10(2009.01)i
FI: H04W72/04 136, H04W48/10

According to International Patent Classification (IPC) or to both national classification and IPC

**B. FIELDS SEARCHED**

Minimum documentation searched (classification system followed by classification symbols)
Int. Cl. H04W72/04, H04W48/10

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2018/089941 A1 (MOTOROLA MOBILITY LLC) 17 May 2018 (2018-05-17), paragraphs [0095]-[0109], fig. 6, 7 | 1-15 |
| X | WO 2020/088662 A1 (MEDIATEK INC.) 07 May 2020 (2020-05-07), paragraphs [0033], [0034], [0052], [0053], fig. 2, 6 | 1, 7-15 |

☐ Further documents are listed in the continuation of Box C.    ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 11.08.2021 | 24.08.2021 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT
Information on patent family members

International application No.

PCT/JP2021/019715

| Patent Documents referred to in the Report | Publication Date | Patent Family | Publication Date |
|---|---|---|---|
| WO 2018/089941 A1 | 17.05.2018 | US 2018/0139084 A1 paragraph [0095]-[0109],fig. 6, 7 CN 109906579 A | |
| WO 2020/088662 A1 | 07.05.2020 | US 2020/0146095 A1 paragraphs [0033], [0034], [0052], [0053], fig. 2, 6 CN 111406429 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2020133006 A

**Non-patent literature cited in the description**

• **NTT DOCOMO.** Revised WID on New Radio Access Technology. *RP-181726,* September 2018
• **CHINA TELECOM.** New SID on NR coverage enhancement. *RP-193240,* December 2019
• **ERICSSON.** New SID on Support of Reduced Capability NR Devices. *RP-193238,* December 2019